# FASCICULE DE BREVET EUROPEEN

(11) **EP 2 280 807 B1**
(45) Date de publication et mention de la délivrance du brevet: **19.06.2019**
(21) Numéro de dépôt: 09742215.8
(22) Date de dépôt: 17.04.2009
(51) Int. Cl.: B25J 9/10

(54) **ROBOT MANIPULATEUR ET COMMANDE ASSOCIEE POUR UN POSITIONNEMENT FIN DE L'EXTREMITE TERMINALE**
MANIPULATORROBOTER UND ENTSPRECHENDE STEUERUNG ZUR FEINPOSITIONIERUNG VON DESSEN ENDANSCHLUSS
MANIPULATOR ROBOT AND ASSOCIATED CONTROL FOR FINE POSITIONING OF THE TERMINAL END

(30) Priorité: 24.04.2008 FR 0852750
(43) Date de publication de la demande: 09.02.2011
(73) Titulaire: Université du Havre, 76063 Le Havre Cedex (FR)
(72) Inventeur: BRETHE Jean-François, F-76430 Sainneville (FR)
(74) Mandataire: Novagraaf Technologies
(86) Numéro de dépôt international: PCT/FR2009/000459
(87) Numéro de publication internationale: WO 2009/136017

(56) Documents cités:
- JP-A- 3 228 588
- US-A- 4 523 100
- US-A- 5 016 489
- CAI HEGAO ET AL: "The implementation of active/passive coordinated manipulation in precision assembly based on force-feedback" INDUSTRIAL ELECTRONICS, 1992., PROCEEDINGS OF THE IEEE INTERNATIONAL S YMPOSIUM ON XIAN, CHINA 25-29 MAY 1992, NEW YORK, NY, USA,IEEE, US, 25 mai 1992 (1992-05-25), pages 347-351, XP010045417 ISBN: 9780780300422

## Description

### Domaine technique de l'invention

L'invention se rapporte au domaine des robots manipulateurs permettant le déplacement d'une extrémité terminale.

### ETAT DE LA TECHNIQUE ANTERIEURE

Les robots manipulateurs ont pour fonction de déplacer et positionner un objet ou un outil dans l'espace. Ils peuvent présenter une structure sérielle, parallèle ou plus rarement hybride. Dans le cas des structures sérielles, les différentes pièces constituant le robot sont articulées les unes à partir des autres, en série et les mouvements relatifs sont obtenus à partir d'actionneurs disséminés le long de la chaîne cinématique. Dans le cas de la structure parallèle, plusieurs chaînes cinématiques se referment et les éléments constitutifs de ces chaînes ne sont pas tous nécessairement actionnés activement.

Les robots manipulateurs sériels, hybrides ou parallèles présentent un certain nombre de degré de mobilité permettant d'obtenir des degrés de liberté pour l'objet à manipuler.

La plupart des robots sériels commercialisés industriellement sont :
- De type SCARA, deux bras mobiles dans un plan et un degré de mobilité dans une direction perpendiculaire à ce plan (éventuellement complété par une rotation autour de ce dernier axe), permettant de positionner et d'orienter un solide dans des plans parallèles à un plan de base
- Soit du type anthropomorphique, une base, une épaule, un bras supportant un poignet donnant au final six degrés de liberté (trois en position, trois en orientation)

Un robot peut être redondant si le nombre de degré de mobilité (lié au nombre d'actionneurs) est supérieur au nombre de degré de liberté obtenu pour le solide manipulé. Généralement ces robots sont difficiles à commander mais permettent d'éviter des obstacles situés dans l'espace de travail ou de travailler dans des espaces difficilement accessibles.

La norme ISO 9283 définit les critères de performance à prendre en compte pour un robot industriel, notamment la répétabilité et l'exactitude de pose. Jusqu'à présent, la répétabilité de pose des robots manipulateurs, qu'ils soient sériels ou parallèles, redondants ou non, ne dépasse pas une valeur proche du centième de millimètres. Quant aux performances en exactitude, elles sont encore plus faibles et aujourd'hui les meilleurs robots ne peuvent garantir qu'un positionnement exact à plus ou moins 0,03 millimètres dans l'espace de travail.

Dans des domaines tels que celui de l'horlogerie, où il est nécessaire d'insérer des axes dans des trous de 0,2 millimètres de diamètre, ou celui de l'opto-électronique, une répétabilité inférieure à 0,01mm et une exactitude de pose de l'ordre de 0,01mm s'avèrent nécessaires.

Pour certaines configurations qualifiées de singulières, le nombre de degré de liberté de l'extrémité terminale du robot est localement strictement inférieur au nombre de degré de mobilité. La matrice jacobienne est la matrice issue de la différentiation du modèle géométrique du robot ; elle n'est plus inversible en des positions singulières. Ceci pose problème lorsque par exemple le robot est commandé par modèle différentiel inverse. D'où généralement on évite de positionner l'extrémité terminale d'un robot dans des zones proches des configurations singulières en raison des problèmes de commande sous-jacents.

On connaît dans l'art antérieur le document US4523100 décrivant un robot comportant un bras articulé supportant une tête articulée pour des micromouvements. Le bras articulé assure un positionnement grossier de la tête articulée, et le positionnement précis est assuré par des verniers à déplacement linéaires, constituant les articulations de la tête. Ce robot présente l'inconvénient de nécessiter au moins 6 articulations, de nature différente.

Dans le cadre de dispositifs qualifiés de macro/micro pour positionner précisément un objet dans l'espace tridimensionnel, les déplacements fins de l'extrémité terminale sont généralement assurés par un dispositif micrométrique indépendant fixé en aval de la chaîne cinématique ; l'ensemble nécessite au minimum trois articulations de la structure porteuse pour positionner le dispositif micrométrique et le dispositif micrométrique comprend lui-même trois articulations, soit généralement 6 articulations.

### EXPOSE DE L'INVENTION

L'invention vise à remédier aux inconvénients de l'état de la technique et notamment à apporter un positionnement précis de l'extrémité terminale de robots redondants, se traduisant par une amélioration des performances en précision (répétabilité et exactitude de pose) par rapport à l'art antérieur. De plus, la présente invention permet de travailler dans des zones proches de la base ou de configurations singulières de la structure robotique. Comparativement aux dispositifs macro/micro, l'invention permet de réduire significativement le nombre d'articulations utilisées pour le positionnement fin en proposant une architecture intégrée.

L'invention se rapporte à des structures robotiques totalement intégrées et redondantes pour lesquelles existe une zone dite « d'intérêt » dans laquelle le positionnement fin de l'extrémité terminale du robot peut être obtenu. La zone d'intérêt ne couvre pas la totalité de l'espace de travail accessible par l'extrémité du robot, mais un volume d'action préférentiel, à l'intérieur duquel l'extrémité du robot peut effectuer une trajectoire quelconque, contrairement à la solution décrite par le brevet US4523100.

L'invention se rapporte à un robot comportant un bras articulé pour le déplacement d'une extrémité dans un espace à N dimensions comprenant au moins N+1 articulations motorisées, ainsi qu'un calculateur pour commander les déplacements desdites articulations motorisées, ledit calculateur commandant une première étape de prépositionnement de l'extrémité terminale du bras articulé et une deuxième étape de positionnement fin,

Ladite première étape de prépositionnement consistant à faire entrer l'extrémité du bras articulé dans la zone d'intérêt, le plus près possible du centre de la zone de positionnement optimal, centre défini en fonction de N articulations motorisées secondaires, une au moins desdites articulations secondaires étant un axe de rotation ;

Ladite deuxième étape de positionnement fin consistant à bloquer toutes les articulations à l'exception desdites N articulations motorisées secondaires et à commander le déplacement de l'extrémité terminale par déplacements élémentaires de l'une au moins des N articulations secondaires.

Dans des modes de réalisation particuliers :
- le bras articulé pour un positionnement dans un espace tridimensionnel comprend au moins quatre articulations motorisées dont parmi elles au moins deux axes de rotation, la première étape de prépositionnement consistant à amener l'extrémité terminale du robot dans la zone d'intérêt, ladite zone d'intérêt étant un sous-ensemble de l'espace de travail, et en ce que la deuxième étape de positionnement fin consiste à bloquer toutes les articulations à l'exception de trois articulations motorisées secondaires dont parmi elles lesdits deux axes de rotation et à procéder au positionnement final par déplacements élémentaires d'au moins une desdites articulations secondaires.
- le bras articulé pour un positionnement dans un espace tridimensionnel comprend au moins quatre articulations motorisées dont parmi elles au moins un axe de rotation, la première étape de prépositionnement consistant à amener l'extrémité terminale du robot dans la zone d'intérêt, ladite zone d'intérêt étant un sous-ensemble de l'espace de travail, et en ce que la deuxième étape de positionnement fin consiste à bloquer toutes les articulations à l'exception de trois articulations motorisées secondaires dont parmi elles ledit axe de rotation et à procéder au positionnement final par déplacements élémentaires d'au moins une desdites articulations secondaires.
- la structure articulée comprend au moins trois articulations motorisées dont parmi elles au moins deux axes de rotation parallèles dits secondaires et en ce que la première étape de prépositionnement consiste à amener l'extrémité terminale du robot dans la zone d'intérêt ; la deuxième étape de positionnement fin consistant à bloquer toutes les articulations motorisées à l'exception desdits axes de rotation motorisés secondaires et à procéder au positionnement final par déplacements élémentaires par rotation d'au moins un desdits axes secondaires.
- le bras articulé pour un positionnement dans un plan de l'espace comprend au moins trois articulations motorisées dont parmi elles au moins un axe de rotation, la première étape de prépositionnement consistant à amener l'extrémité terminale du robot dans la zone d'intérêt, ladite zone d'intérêt étant un sous-ensemble de l'espace de travail, et en ce que la deuxième étape de positionnement fin consiste à bloquer toutes les articulations à l'exception de deux articulations motorisées secondaires dont parmi elles ledit axe de rotation et à procéder au positionnement final par déplacements élémentaires d'au moins une desdites articulations secondaires.
- le bras articulé pour un positionnement dans un espace tridimensionnel comprend au moins quatre articulations motorisées en série dont parmi elles au moins 3 axes de rotation dits secondaires, la première étape de prépositionnement consistant à amener l'extrémité terminale du robot dans une zone d'intérêt, ladite zone d'intérêt étant un sous-ensemble de l'espace de travail, dans laquelle les bras de levier par rapport aux trois axes de rotation secondaires sont de faibles longueurs et en ce que la deuxième étape de positionnement fin consiste à bloquer toutes les articulations à l'exception desdits axes de rotation motorisés secondaires et à procéder au positionnement final par déplacements élémentaires par rotation d'au moins un desdits axes secondaires.
- le bras articulé comprend au moins trois articulations motorisées en série dont parmi elles au moins deux axes de rotation parallèles dits secondaires et en ce que la première étape de prépositionnement consiste à amener l'extrémité terminale du robot dans la zone d'intérêt, a fortiori dans la zone de positionnement optimale, ladite zone de positionnement optimale étant un disque dont le centre est le sommet opposé à l'hypoténuse d'un triangle rectangle isocèle compris dans un plan contenant l'extrémité terminale du bras manipulateur et perpendiculaire aux axes de rotation secondaires, l'hypoténuse possédant un premier sommet sur le premier axe de rotation secondaire et un deuxième sommet sur le deuxième axe de rotation secondaire ; le diamètre dudit disque est approximativement égal à la distance entre les deux axes de rotation secondaires ; la deuxième étape de positionnement fin consistant à bloquer toutes les articulations motorisées à l'exception desdits axes de rotation motorisés secondaires et à procéder au positionnement final par déplacements élémentaires par rotation d'au moins un desdits axes secondaires.
- ledit robot comprend au moins une articulation supplémentaire placée en amont de la chaîne cinématique et une étape liminaire permet la définition d'une zone d'intérêt par l'action de cette ou ces articulations supplémentaires.
- le positionnement fin est obtenu de manière indirecte par répétition d'une portion de trajectoire à partir d'un point particulier appelé point d'harmonisation vers le point cible, afin de s'affranchir des problèmes de frottements secs, le point d'harmonisation étant un point situé en dehors de la zone morte liée au point cible.
- le positionnement fin est obtenu par exploitation d'informations extéroceptives de position permettant de déduire l'écart entre la position de l'extrémité terminale du robot et le point cible et de commander le robot par des rotations élémentaires autour des axes secondaires.
- les deux étapes sont calculées préalablement à l'exécution, pour préparer une loi de commande pour un déplacement continu.
- les deux étapes sont calculées préalablement à l'exécution, pour préparer une loi de commande et un recalcul périodique en cours de déplacement.
- la conception du robot redondant pour le positionnement fin permet à chaque étape de disposer d'un modèle géométrique inversible.
- la commande du robot redondant pour le positionnement fin utilise à l'issue de la phase de prépositionnement un processus de calibration local pour une meilleure exactitude de pose.
- un poignet est fixé à l'extrémité du robot permettant le contrôle de l'orientation d'un objet ou outil.

Dans des modes de réalisation alternatifs :
- les axes secondaires sont choisis comme étant ceux qui possèdent le plus petit bras de levier par rapport au point cible.
- la distance entre les deux axes secondaires est plus faible que la distance entre un axe secondaire et un troisième axe, ainsi que la distance entre le troisième axe et le point terminal.
- Les capteurs de position angulaires des articulations secondaires présentent une résolution supérieure à la résolution des capteurs des autres articulations.
- La conception du robot redondant pour le positionnement fin en deux étapes permet à chaque étape de disposer d'un modèle géométrique inversible en raison de la redondance de deux axes de rotation consécutifs parallèles sur la chaîne cinématique.

La structure robotique est composée d'au moins trois segments articulés en mode série, hybride ou parallèle, selon une configuration redondante, de capteurs proprioceptifs permettant d'obtenir les informations sur les actionneurs de la chaîne cinématique, et d'un calculateur permettant de commander ladite chaîne cinématique.

Deux types d'articulations sont définies au niveau de la chaîne cinématique constituant la structure robotique : les articulations pour le positionnement et l'orientation dénommées articulations primaires (de type rotoïde, prismatique ou autre type d'articulation connue par l'homme du métier), puis parmi celles-ci, certaines articulations rotoïdes utilisées pour un positionnement précis de l'extrémité terminale du robot, appelées articulations secondaires. Le choix des articulations rotoïdes secondaires dans la chaîne cinématique dépend de la configuration de la structure robotique, certaines articulations rotoïdes pouvant être considérées comme des articulations secondaires pour une configuration donnée et uniquement comme des articulations primaires pour une autre configuration. Le choix des axes secondaires est basé sur le principe que les distances entre les axes de rotation secondaires et l'extrémité terminale du robot sont faibles relativement aux distances entre les axes de rotation non secondaires et l'extrémité terminale du robot.

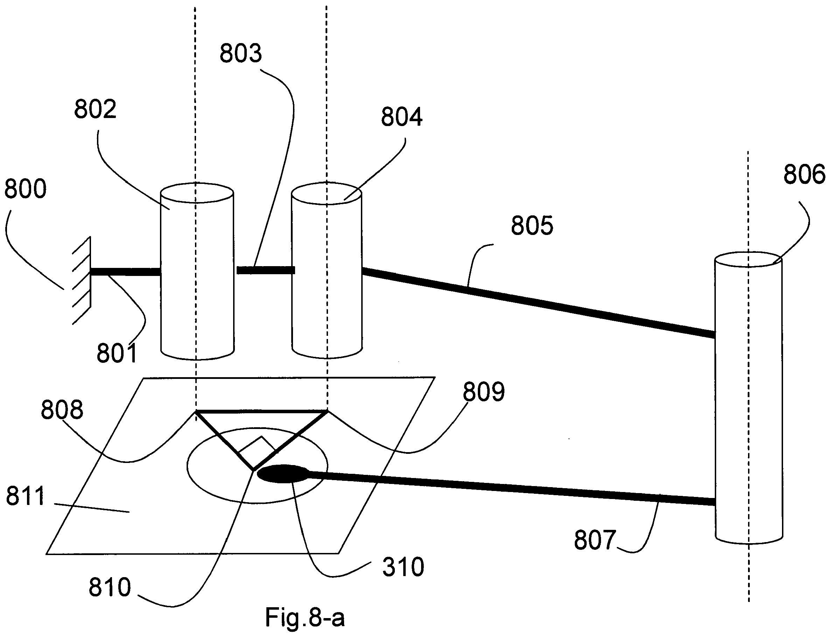

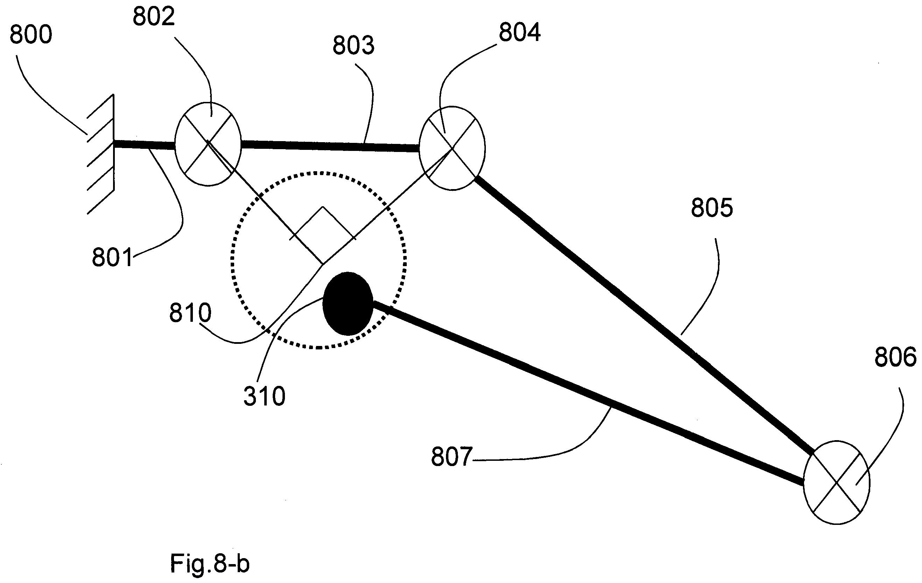

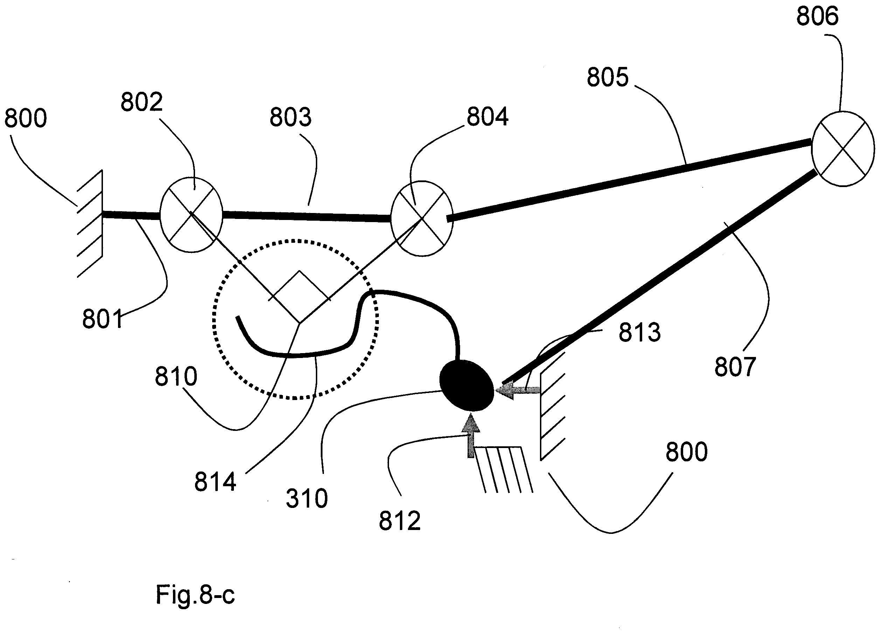

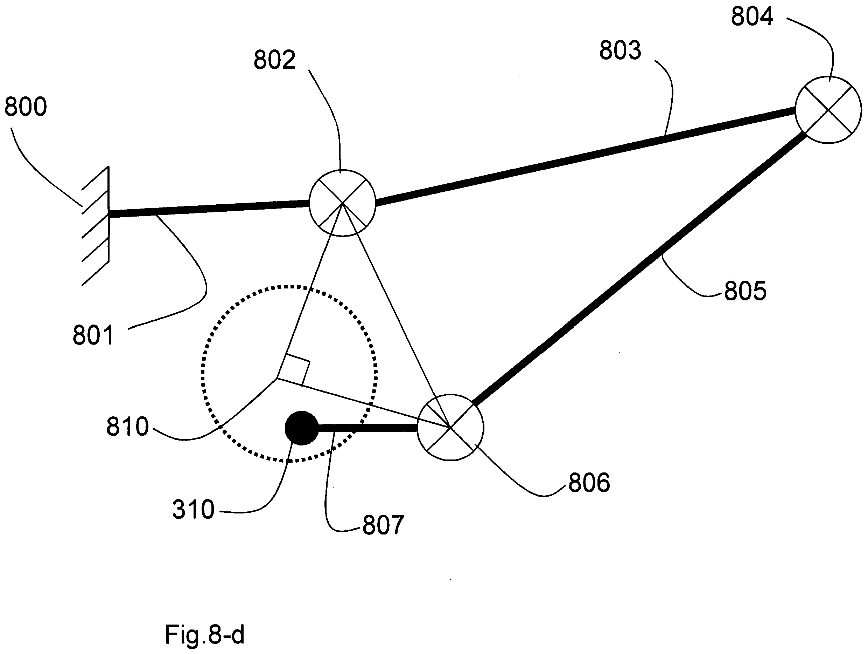

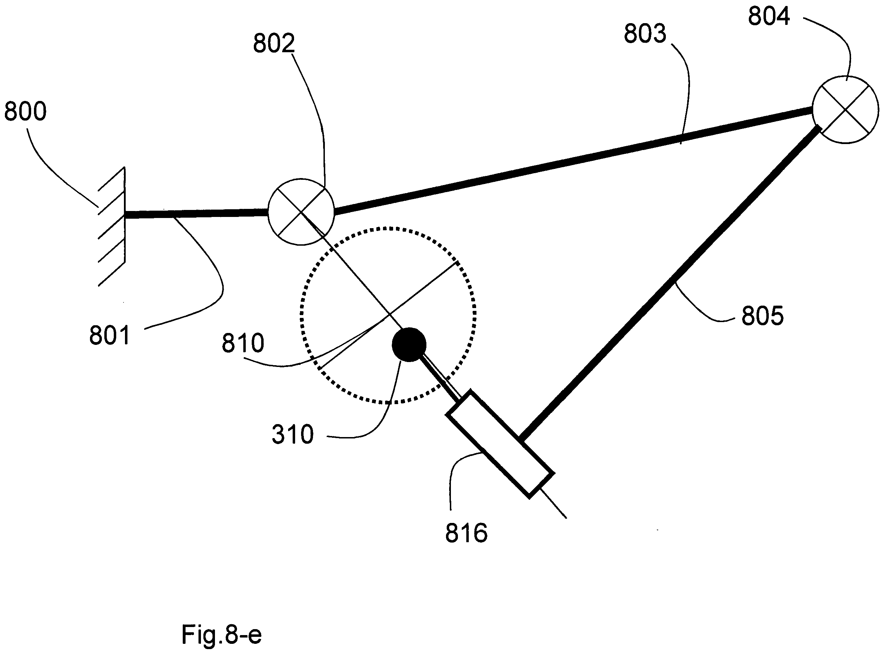

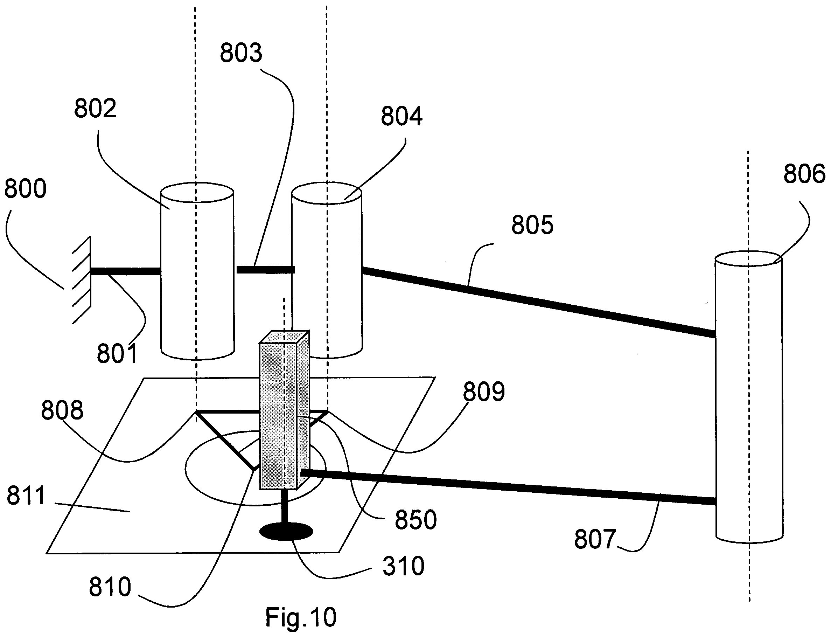

Dans des modes de réalisation alternatifs, certaines articulations rotoïdes motorisées secondaires peuvent être remplacées par des liaisons prismatiques pour permettre un positionnement précis dans un plan ou l'espace tridimensionnel à condition qu'il subsiste au moins une articulation rotoïde motorisée parmi les articulations secondaires ; ainsi pour un positionnement fin dans l'espace tridimensionnel, les articulations secondaires peuvent résulter de la combinaison de deux articulations rotoïdes et une articulation prismatique motorisées comme l'illustre la figure 10 ou d'une articulation rotoïde et de deux articulations prismatiques motorisées ; pour un positionnement dans le plan, les articulations secondaires peuvent résulter de la combinaison d'une articulation rotoïde et d'une articulation prismatique motorisées comme l'illustre la figure 8-e.

La zone d'intérêt est une zone restreinte de l'espace de travail dépendant intrinsèquement de la configuration de la structure robotique et pour laquelle les propriétés suivantes sont vérifiées : l'extrémité terminale du robot peut être positionnée dans la zone d'intérêt ; la résolution spatiale de positionnement obtenue en commandant les axes de rotation secondaires y est plus fine que dans le reste de l'espace de travail ; les déplacements vectoriels élémentaires induits par les rotations élémentaires autour des axes de rotation secondaires forment une famille génératrice de vecteurs de l'espace, idéalement une base orthogonale.

Pour un positionnement fin dans l'espace tridimensionnel, on choisira trois articulations secondaires dans la chaîne cinématique. Pour un positionnement fin dans un plan, on choisira deux articulations secondaires dans la chaîne cinématique. Pour un positionnement fin sur une droite, on choisira une articulation secondaire dans la chaîne cinématique. Cependant dans ces différents cas de figures, on pourra être amené à choisir plus d'articulations secondaires que défini précédemment, l'homme du métier étant apte à concevoir une commande qui pourra gérer la redondance locale engendrée par des déplacements élémentaires formant une famille de vecteurs liés dans l'espace vectoriel des déplacements souhaités, les principes et avantages de l'invention restant valables.

Au sein de la zone d'intérêt, on peut distinguer une zone de positionnement optimal (ZPO). Le centre de la ZPO est un point particulier de la ZPO situé à égale distance des axes secondaires et pour lequel les déplacements vectoriels élémentaires induits par les rotations élémentaires autour des axes de rotation secondaires forment une base orthogonale de vecteurs de l'espace.

Toutes les structures robotiques redondantes ne possèdent pas nécessairement une zone d'intérêt, ni a fortiori de ZPO.

Pour une structure robotique donnée, la zone d'intérêt et la ZPO dépendent de la configuration de la chaîne cinématique. Cependant seule une partie de l'espace de travail peut devenir zone d'intérêt. Le concepteur de la structure robotique doit veiller à définir ses dimensions de manière à ce que la ZPO puisse exister, avoir un volume suffisant et être atteignable par des mouvements et configurations en adéquation avec l'application souhaitée. L'utilisateur doit, quant à lui, choisir dans l'ensemble des configurations possibles, celle qui lui permettra de faire coïncider la zone où il veut réaliser le positionnement fin et la zone d'intérêt, voire a fortiori la ZPO. L'idéal est que le positionnement fin se fasse dans une région proche du centre de la ZPO.

Lorsque le positionnement final se fait au niveau du centre de la ZPO, la commande spatiale de positionnement fin est découplée par rapport aux commandes des axes secondaires. Lorsque l'on s'éloigne du centre de la ZPO tout en restant dans la zone d'intérêt, un couplage partiel peut apparaître.

L'invention se rapporte à la commande de positionnement fin qui se décompose en deux étapes indépendantes ; la première étape appelée étape de prépositionnement consiste à amener l'extrémité terminale du bras manipulateur dans la zone d'intérêt, a fortiori dans la ZPO ; la seconde étape consiste à positionner finement l'extrémité terminale du bras manipulateur en utilisant uniquement une ou plusieurs articulations secondaires.

Lors de l'étape de positionnement fin, seuls les axes de rotation secondaires sont activés. Du fait de la présente structure et à égale résolution sur les codeurs angulaires, ceci permet une amélioration notable et calculable de la répétabilité de pose évaluée par rapport aux axes de rotation secondaires. D'autre part, au centre de la ZPO, la commande entre espace cartésien et espace articulaire secondaire est découplée. Cette faible valeur de la répétabilité de pose permet de corriger localement des erreurs de position en limitant fortement les non-linéarités intrinsèques à la «sphère » de répétabilité. On peut par exemple utiliser une commande par ellipsoïde de saut.

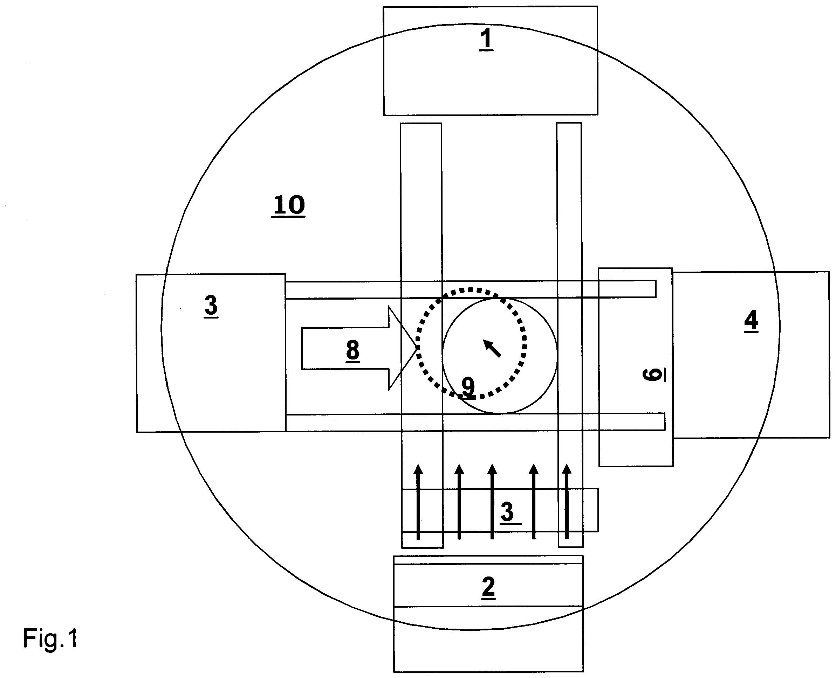

Lors de l'étape de positionnement fin, des informations issues de capteurs extéroceptifs de position (micromètres mécaniques numériques, optiques ou autres, microscopes, procédés de vision,...) peuvent être intégrées dans le système de commande. Les informations issues de ces capteurs permettent d'obtenir les écarts relatifs entre la position finale souhaitée et la position atteinte par l'extrémité terminale. La figure 1 concerne une table d'assemblage fin illustrant ce principe. Le dispositif comporte une platine d'assemblage 10, un premier ensemble formé par un micromètre à balayage laser Nord 1 et un micromètre à balayage laser Sud 2 associé à un faisceau laser 3, et un deuxième ensemble formé par un micromètre à balayage laser Est 4 et un micromètre à balayage laser Ouest 5 associé à un faisceau laser 6. Les deux micromètres à balayage laser (Est-Ouest , Nord-Sud) permettent d'obtenir les positions relatives entre un arbre 8 et un alésage 9. Cet écart peut alors être utilisé au sein du système de commande pour obtenir le positionnement final désiré.

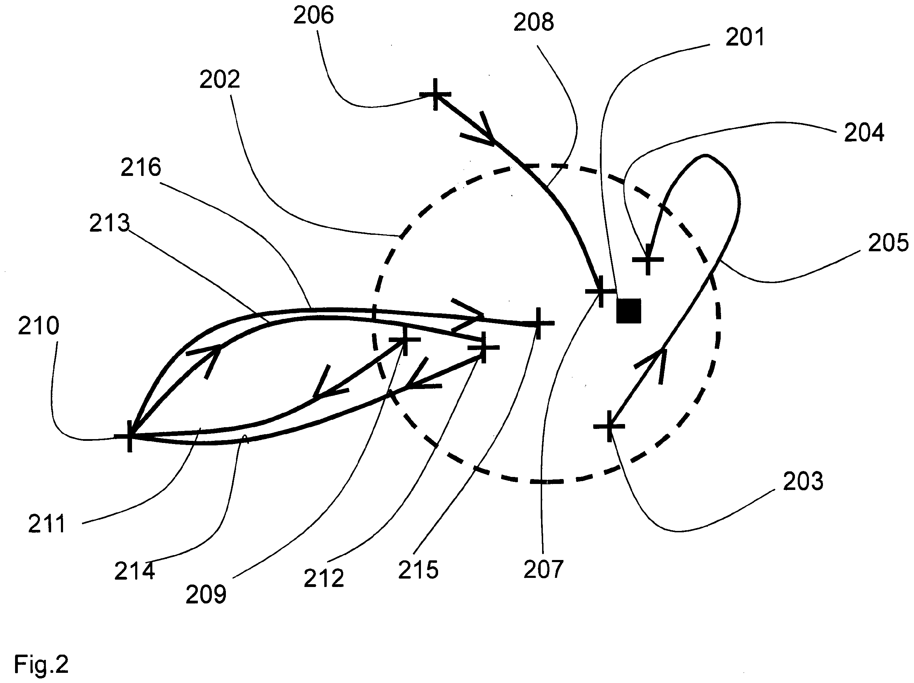

La figure 2 illustre différentes méthodes pouvant être mises en oeuvre pour corriger l'écart entre la position souhaitée 201 et la position atteinte. En raison des frottements secs, de petits écarts de position des articulations sont parfois difficiles à corriger. Au niveau de l'asservissement, la commande proportionnelle n'exerce pas un effort suffisant (couple ou force) pour vaincre les efforts de frottements secs dans une zone dénommée zone morte représentée ici par la sphère 202 où il n'y a pas génération de mouvement ; il faut attendre l'action corrective intégrale de l'asservissement générant au final des efforts suffisants pour provoquer un mouvement, avec le risque d'induire par la suite des phénomènes de dépassement liés à la dynamique du système ; c'est le cas de la trajectoire 205 permettant d'aller du point 203 situé dans la zone morte au point 204. Ces dépassements peuvent avoir des effets néfastes en termes de sécurité et sûreté de fonctionnement. Le positionnement final 207 peut être obtenu par une commande directe (par exemple différentielle inverse) si l'origine 206 de la trajectoire 208 est en dehors de la zone morte. Si la position atteinte 209 se trouve dans la zone morte, il est possible d'obtenir le positionnement fin en utilisant la procédure suivante : on définit un point d'harmonisation 210 situé en dehors de la zone morte obtenu par la trajectoire 211. Le principe est alors de répéter une trajectoire 213 partant de ce point d'harmonisation 210 en ajustant la consigne finale en fonction de l'écart mesuré entre la position atteinte 212 et la cible 201. On revient donc par la trajectoire 214 au point d'harmonisation 210. On modifie légèrement la consigne finale en tenant compte de l'écart entre le point 212 et la cible 201. La trajectoire 216 mène du point d'harmonisation 210 vers le point 215 plus proche de la cible 201. On peut recommencer ce processus jusqu'à ce que le point final soit suffisamment proche de la cible 201.

L'exactitude de position obtenue par la structure robotique lors de l'étape de prépositionnement reste celle d'un robot manipulateur classique. Elle peut être nettement améliorée lors de la phase de positionnement fin dans la zone d'intérêt en utilisant une procédure de calibration locale. Cette procédure peut par exemple consister à mesurer précisément la position de l'extrémité terminale par capteurs extéroceptifs en un point de la zone d'intérêt et à en déduire ensuite par calcul à partir du modèle géométrique (ou différentiel) basé uniquement sur les axes secondaires les variations de position de l'extrémité terminale lors de la phase de positionnement fin. D'autres stratégies peuvent aussi être envisagées : plusieurs capteurs répartis dans la zone d'intérêt couplés à différentes configurations permettant au final de déduire la position de l'extrémité terminale dans la zone d'intérêt en diminuant l'incertitude liée aux capteurs de position des articulations non secondaires et aux erreurs du modèle géométrique sur une partie de la chaîne cinématique. Cette calibration locale doit permettre de diminuer d'un ordre de grandeur l'importance des erreurs du modèle géométrique lié aux axes secondaires.

Il est possible de faire travailler la structure robotique telle que définie en dehors de la zone d'intérêt, le fonctionnement du robot étant alors celui d'un robot redondant classique, sans positionnement fin.

Les commandes des articulations par les actionneurs se fait classiquement en boucle fermée en utilisant les informations proprioceptives issues de capteurs de position (par exemple des codeurs) généralement utilisés sur ce type de robot.

L'orientation d'un objet ou outil fixé sur l'extrémité terminale du bras articulé peut être contrôlée de manière classique à partir de différentes articulations réparties sur la chaîne cinématique.

Il est envisageable dans un mode de réalisation alternatif de placer un poignet sur l'extrémité terminale du bras robotisé permettant de contrôler l'orientation d'un objet ou d'un outil fixé à l'extrémité terminale.

### BREVE DESCRIPTION DES FIGURES

D'autres caractéristiques et avantages de l'invention ressortiront à la lecture de la description qui suit, en référence aux figures annexées présentées succinctement ci-après :
- La figure 1 concerne une table d'assemblage fin comportant deux micromètres à balayage laser permettent d'obtenir les positions relatives entre un arbre et un alésage
- La figure 2 illustre différentes trajectoires pour corriger l'écart entre la position souhaitée et la position atteinte.
- la figure 3 représente un schéma en perspective de la chaîne cinématique d'un mode générique de réalisation pour un positionnement fin dans l'espace tridimensionnel ;
- les figures 4-a (vue en perspective), 4-b (vue de dessus) et 4-c (vue latérale) représentent un schéma de la chaîne cinématique d'un premier mode particulier de réalisation pour un positionnement fin dans l'espace tridimensionnel ;
- les figures 5-a (vue latérale) et 5-b (vue de dessus) représentent un schéma de la chaîne cinématique d'un second mode particulier de réalisation pour un positionnement fin dans l'espace tridimensionnel ;
- la figure 6-a (vue latérale) et 6-b (vue de dessus) représentent un schéma de la chaîne cinématique d'un troisième mode particulier de réalisation pour un positionnement fin dans l'espace tridimensionnel ;
- la figure 7 représente une chaîne cinématique d'un mode générique de réalisation, pour le positionnement précis de l'extrémité terminale dans un plan de l'espace ;
- les figures 8-a (vue en perspective) et 8-b (vue de dessus) représentent un schéma de la chaîne cinématique d'un premier mode particulier de réalisation pour un positionnement fin dans l'espace bidimensionnel ; la figure 8-c illustre l'amélioration de l'exactitude par un procédé de calibration locale ; la figure 8-d est une variante pour laquelle le degré de mobilité supplémentaire est inséré entre les deux axes de rotation secondaires ; la figure 8-e illustre un mode de réalisation alternatif où une articulation secondaire rotoïde est remplacée par une articulation prismatique.
- la figure 9 (vue de dessus) représente un schéma de la chaîne cinématique d'un second mode particulier de réalisation pour un positionnement fin dans l'espace bidimensionnel, permettant la définition de la zone d'intérêt et le positionnement précis de l'extrémité terminale du bras robotisé dans cette zone.
- la figure 10 (vue de dessus) représente un schéma de la chaîne cinématique d'un mode particulier de réalisation pour un positionnement fin dans l'espace tridimensionnel où l'une des articulations secondaires est prismatique.
- la figure 11 (vue de dessus) représente un schéma de la chaîne cinématique d'un mode particulier de réalisation correspondant à une structure robotique hybride pour un positionnement fin dans un plan.

### DESCRIPTION DETAILLEE DE MODES DE REALISATION

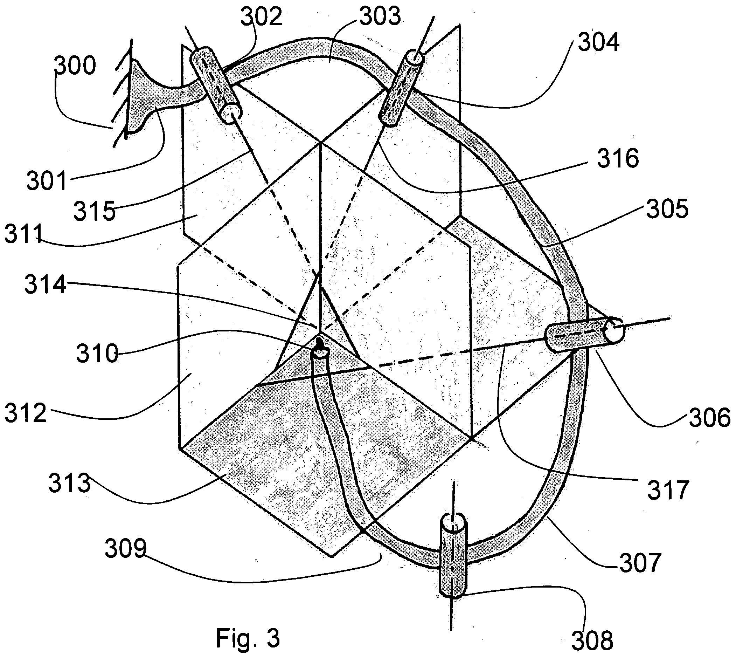

En référence à la figure 3, dans un mode générique de réalisation pour un positionnement fin dans l'espace tridimensionnel, la structure robotique est constituée de trois articulations rotoïdes 302, 304 et 306 dites articulations secondaires, reliées d'une part au bâti 300 par l'intermédiaire d'une chaîne cinématique 301, d'autre part entre elles par les chaînes cinématiques 303 et 305 et enfin à l'extrémité terminale 310 par une dernière chaîne cinématique. La chaîne cinématique globale de la structure robotique possède au moins une articulation supplémentaire, (soit un quatrième degré de mobilité) faisant partie des articulations dites primaires et permettant à l'extrémité terminale de la chaîne cinématique de parcourir un espace plus large que l'espace de travail attaché uniquement aux articulations secondaires. Cette quatrième articulation peut être insérée au choix dans une des chaînes cinématiques 301, 303, 305 ou entre 306 et 310, en l'occurrence ici il s'agit de la liaison rotoïde 308.

Les structures robotiques concernées par l'invention et permettant un positionnement fin définissent dans l'espace tridimensionnel une zone dite d'intérêt qui correspond à un ensemble de points pour lesquels les distances par rapport aux trois axes dits secondaires 302, 304 et 306 sont faibles mais non nulles et les déplacements induits par des rotations élémentaires autour des axes de rotation 302, 304 et 306 se font suivant trois directions non coplanaires. Pour une configuration particulière de la structure robotique, dans cette zone d'intérêt, on distingue un sous-ensemble appelé zone de positionnement optimal (ZPO) dont le centre est défini de la manière suivante : il s'agit du point d'intersection 314 des trois plans de l'espace 311, 312 et 313 contenant les axes de rotation 302, 304 et 306. Les distances du point 314 aux axes de rotation 302, 304 et 306 sont sensiblement du même ordre de grandeur ; elles sont non nulles et faibles par rapport aux autres grandeurs caractéristiques de la chaîne cinématique définissant le volume de l'espace atteignable par 310. Lorsque l'extrémité terminale 310 du robot se trouve au point 314, les déplacements induits par des rotations élémentaires autour des axes de rotation 302, 304 et 306 se font suivant trois directions perpendiculaires de l'espace. Pour cette configuration particulière, la ZPO correspond à une sphère de centre 314 et dont le rayon vaut environ la moitié du minimum des distances du point 314 aux axes de rotation 302, 304 et 306.

Le procédé de commande de cette structure consiste à placer l'extrémité terminale 310 dans la ZPO en utilisant les degrés de mobilité primaires puis à bloquer toutes les articulations à l'exception des articulations de rotation secondaires 302, 304 et 306 qui permettent alors d'obtenir un positionnement fin dans la ZPO. La résolution spatiale obtenue au niveau du point 314 est alors beaucoup plus fine que dans le reste de l'espace de travail en raison des faibles bras de levier engendrés par les trois axes secondaires. De plus, les déplacements induits par les rotations élémentaires autour des axes secondaires se faisant suivant trois directions perpendiculaires de l'espace, la commande entre espace articulaire secondaire et espace cartésien est découplée. Lorsque l'on s'éloigne du centre de la ZPO, le découplage tend à disparaître mais les avantages en termes d'amélioration de la précision de positionnement subsistent au sein de la ZPO et plus largement dans la zone qualifiée de zone d'intérêt.

La structure robotique peut aussi être utilisée dans un mode consistant à obtenir un positionnement précis dans l'espace tridimensionnel alors que les trois axes secondaires ne font pas exactement partie de trois plans perpendiculaires concourants en 314 précédemment mentionnés mais que les principes précédents de l'invention sont utilisés : axes primaires et secondaires, faibles bras de leviers par rapport aux axes secondaires, déplacements induits par les axes secondaires non coplanaires.

La structure robotique peut aussi être utilisée dans un autre mode consistant à obtenir un positionnement précis dans un plan de l'espace en utilisant au moins deux axes parmi les axes secondaires précédemment cités.

La structure robotique peut aussi être utilisée dans un autre mode consistant à obtenir un positionnement précis sur une droite de l'espace en utilisant au moins un axe parmi les axes secondaires précédemment cités.

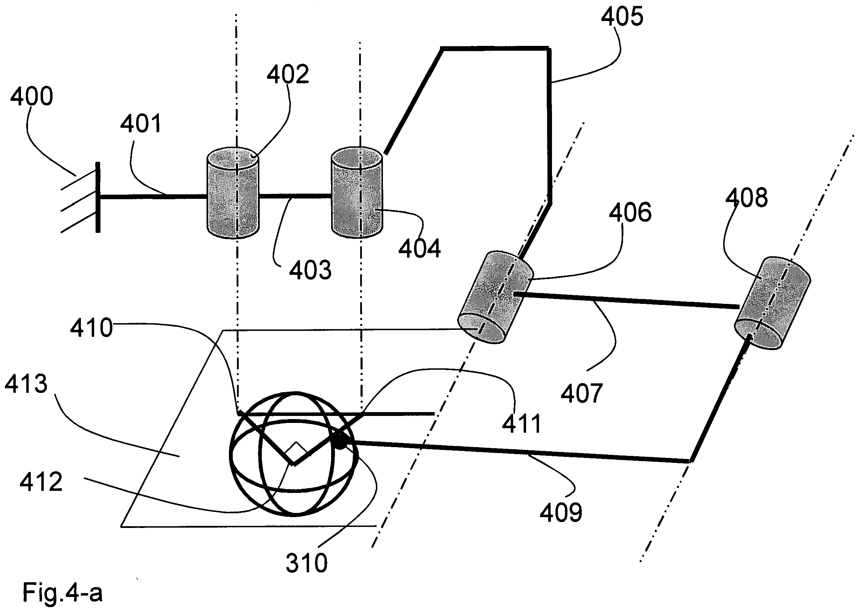

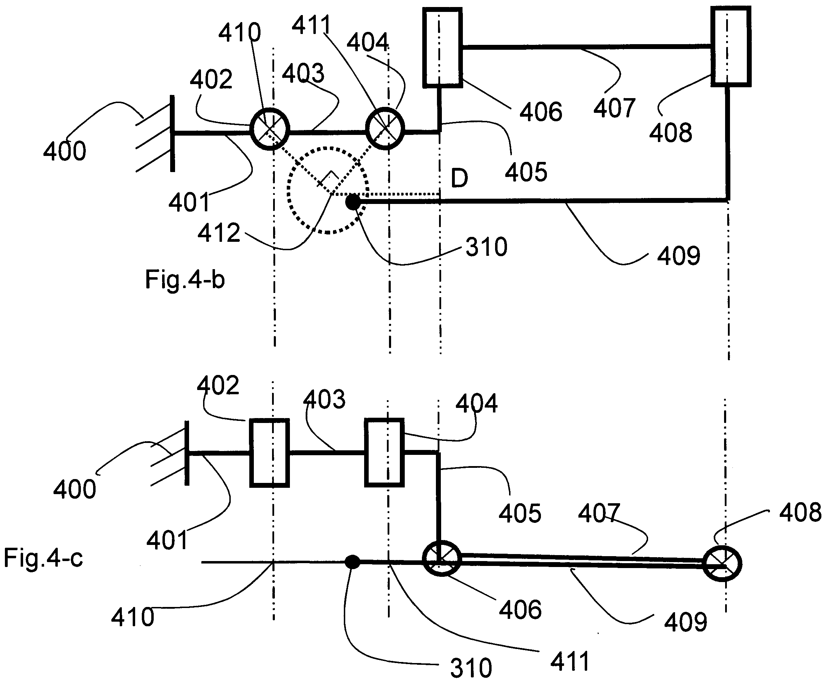

En référence aux figures 4-a, 4-b et 4-c, dans un mode de réalisation particulier permettant le positionnement de l'extrémité terminale dans l'espace tridimensionnel avec une très haute précision, la structure robotique est composée de deux axes de rotation 402 et 404 parallèles et de deux axes de rotation 406 et 408 parallèles entre eux et perpendiculaires aux axes de rotation 402 et 404. Le plan 413 contient l'axe 406 et est perpendiculaire à l'axe 402. Le point 410 est l'intersection du plan 413 avec l'axe 402. Le point 411 est l'intersection du plan 413 avec l'axe 404. La distance entre les axes 404 et 406 est égale à la distance entre les axes 402 et 404 multipliée par le rapport 0,2. La distance entre les axes 406 et 408 est égale à la distance entre l'extrémité terminale 310 et l'axe 408 à laquelle on retranche 0,7 fois la distance entre les axes 402 et 404, de façon à ce que ces deux distances restent du même ordre de grandeur. Nous recherchons un rapport « longueur du bras 407 / longueur du bras 403 » le plus important possible. Selon l'utilisation industrielle effectuée avec un tel bras robotisé, et selon les caractéristiques de l'espace de travail dans lequel le bras robotisé va être amené à travailler, il incombe à l'homme du métier d'optimiser le rapport susmentionné. A défaut de contrainte il est proposé à l'homme du métier de choisir arbitrairement une longueur du bras 407 puis de diviser par un rapport de 10 pour obtenir les longueurs du bras 403. La distance de l'axe 402 à la base du robot 400 n'est pas un critère indispensable et sera déterminée en fonction des contraintes de l'espace de travail. Il est possible que 402 soit directement fixé sur la base 400 sans bras intermédiaire 401.

Le procédé de commande de cette structure consiste à piloter les axes de rotation 402, 406 et 408 afin de positionner l'extrémité terminale 310 dans la zone d'intérêt proche des axes 402, 404 et 406. Idéalement l'homme du métier doit chercher à positionner l'extrémité terminale 310 proche du centre 412 de la ZPO. Le centre de la ZPO est un sommet 412 d'un triangle rectangle isocèle du plan 413 dont l'hypoténuse est le segment reliant le point 410 au point 411. La distance entre 412 et l'axe de rotation 406 est égale à la distance entre 412 et 410. Suivant les configurations des articulations primaires, le point 412 peut occuper différentes positions dans l'espace. Pour une configuration donnée, la ZPO correspond à une sphère de centre 412 et dont le rayon est sensiblement égal à la moitié de la distance entre 410 et 412. Le positionnement de l'extrémité terminale dans la ZPO a pour objectif de minimiser les longueurs des bras de levier associés aux axes de rotation 402, 404 et 406 par rapport à l'extrémité terminale 310, mais sans les annuler afin que l'extrémité du bras manipulateur reste commandable dans l'espace tridimensionnel à partir des axes secondaires. Une fois 310 placé dans la ZPO, l'axe 408 est bloqué. Puis sont activés les axes 402, 404 et 406 afin de procéder au positionnement fin dans l'espace. Au niveau du point 412, les déplacements élémentaires induits par les rotations des axes 402, 404 et 406 s'effectuent suivant trois directions perpendiculaires. De plus à commande et résolution égales sur les capteurs angulaires des axes secondaires, les incréments de position issus des rotations élémentaires des axes secondaires sont identiques dans les trois directions perpendiculaires. Si l'extrémité terminale s'éloigne du point 412 tout en restant dans la ZPO, les déplacements élémentaires ne sont plus nécessairement orthogonaux mais restent linéairement indépendants et, à commande et résolution égales sur les capteurs angulaires, les incréments de position peuvent varier sensiblement. Cependant les avantages en termes d'amélioration de la précision de positionnement subsistent.

La résolution spatiale est liée à la résolution de la commande numérique, aux performances du système de commande des actionneurs caractérisées entre autres par la matrice de covariance et la résolution des capteurs proprioceptifs et à la configuration spatiale du bras robotique. Sur des systèmes modernes, la résolution de la commande numérique peut être considérée comme quasi-continue grâce au traitement en double précision par ordinateur. La structure robotique présentée permet d'obtenir en commandant les axes 402, 404 et 406, une résolution spatiale beaucoup plus fine et une répétabilité nettement meilleure dans la ZPO que dans le reste de l'espace de travail.

Du fait du parallélisme des axes 402 et 404, la redondance de la structure robotique ne pose pas de problèmes particuliers pour la commande du mécanisme lors des deux phases de prépositionnement et de positionnement fin. En effet, il est toujours difficile de piloter un robot redondant car cela nécessite d'intégrer des critères supplémentaires dans le processus de commande (optimisation d'un critère d'énergie par exemple). Ici lors de la phase de prépositionnement, on peut piloter uniquement les axes 402, 406 et 408 avec comme seul objectif d'amener l'extrémité terminale dans la ZPO ; durant cette phase, la structure robotique a un modèle géométrique classiquement inversible. Lors de la phase de positionnement fin, seuls sont activés les axes 402, 404 et 406 et le modèle géométrique est encore classiquement inversible localement.

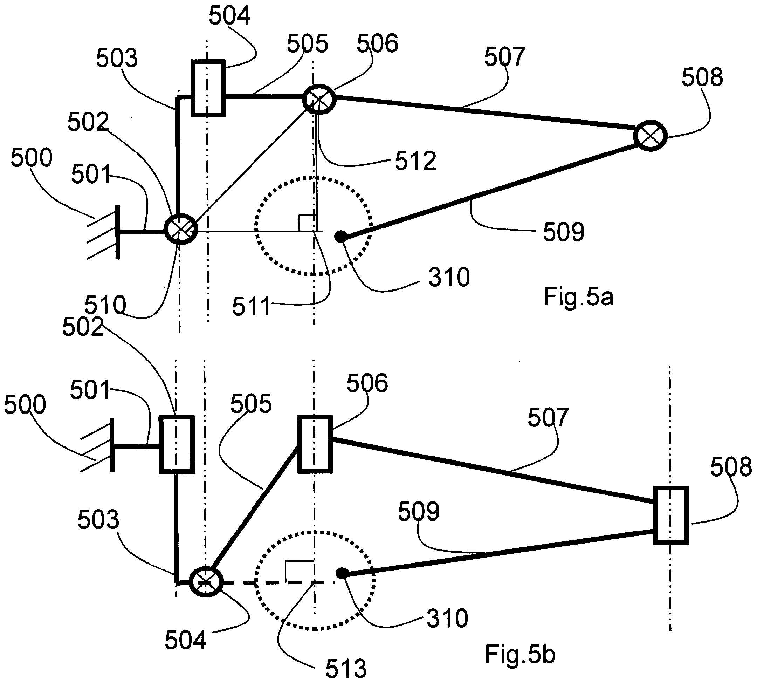

En référence aux figures 5-a et 5-b, dans un mode de réalisation particulier, la structure robotique pour un positionnement précis de l'extrémité terminale du robot dans l'espace tridimensionnel est composée en configuration de référence de trois axes 502, 506 et 508 parallèles et d'un axe 504 perpendiculaire à 502, 506 et 508. En dehors de la configuration de référence, les axes 506 et 508 sont toujours parallèles mais ne sont plus forcément parallèles à l'axe 502.

Pour un dimensionnement de cette structure l'homme du métier cherchera à obtenir un rapport longueur du bras 507 / longueur du bras 505 le plus élevé possible, tout en considérant les contraintes de l'espace de travail. Les longueurs des bras 507 et 509 sont sensiblement égales à 10% près. La longueur du bras 507 est, à défaut de contrainte, au moins 10 plus importante que la distance entre les axes 504 et 506.

La commande de cette structure sera identique en tout point à la structure précédente, commençant par un positionnement de l'extrémité terminale 310 dans la zone d'intérêt par l'action des axes de rotation 504, 506 et 508. Puis une fois l'extrémité 310 positionnée, l'axe 508 est bloqué et le positionnement de précision a lieu grâce à l'activation conjointe de 502, 504 et 506.

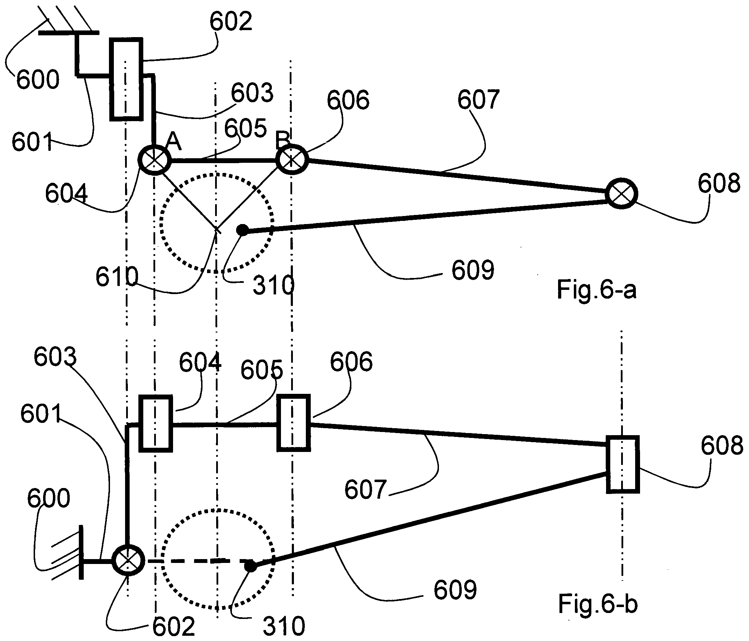

En référence aux figures 6-a et 6-b, dans un mode de réalisation particulier, la structure robotique pour un positionnement précis de l'extrémité terminale du robot dans l'espace tridimensionnel est composée de 3 axes 604, 606 et 608 parallèles et d'un axe 602 perpendiculaire à 604, 606 et 608.

Pour un dimensionnement de cette structure l'homme du métier cherchera à obtenir un rapport longueur du bras 607 / longueur du bras 605 le plus élevé possible, tout en considérant les contraintes de l'espace de travail. Les longueurs des bras 607 et 609 sont sensiblement égales à 10% près. La longueur du bras 607 est, à défaut de contrainte, au moins 10 plus importante que la longueur du bras 605.

La commande de cette structure sera identique en tout point aux structures précédentes, commençant par un positionnement de l'extrémité terminale 310 du bras dans la zone d'intérêt par l'action des axes de rotation 602, 606 et 608 (ou encore des axes de rotation 602, 604 et 608). Puis une fois l'extrémité 310 positionnée, l'axe 608 est bloqué et le positionnement de précision a lieu grâce à l'activation conjointe de 602, 604 et 606.

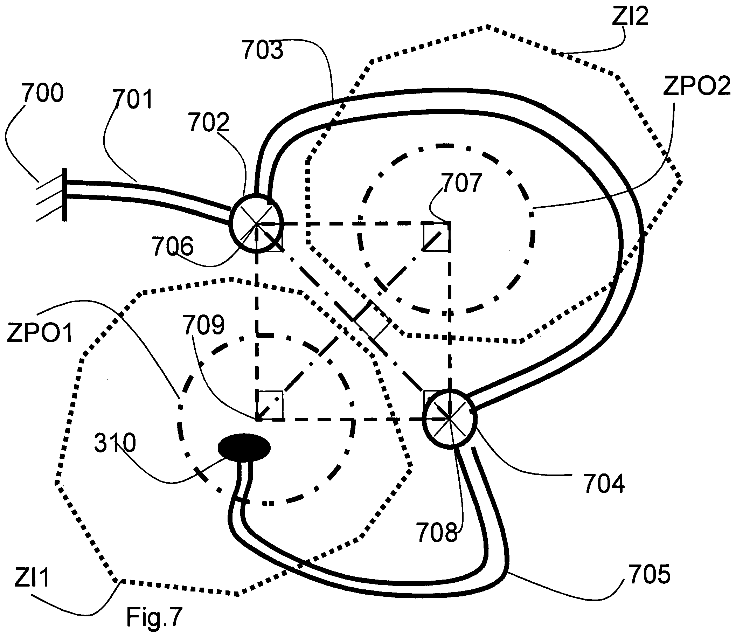

En référence à la figure 7, dans un mode de réalisation générique permettant le positionnement de l'extrémité terminale 310 de la structure robotique dans un plan (P) de l'espace, la structure est composée de trois chaînes cinématiques 701, 703 et 705 et de deux axes de rotation 702 et 704 perpendiculaires au plan (P). La chaîne cinématique 701 relie la liaison rotoïde 702 au support 700 ; la chaîne cinématique 703 relie les deux liaisons rotoïdes 702 et 704 ; la chaîne cinématique 705 relie la liaison rotoïde 704 à l'extrémité terminale 310. Un degré de mobilité supplémentaire dans le plan (en rotation ou translation) se trouve incorporé dans au moins une des chaînes cinématiques 701, 703 ou 705. Ce degré de mobilité a pour objet d'élargir considérablement l'espace atteignable par l'extrémité 310 comparativement à l'espace atteignable par une structure robotique du type SCARA basée sur les articulations 702 et 704.

Le point 706 est l'intersection entre le plan (P) et l'axe 702. Le point 708 est l'intersection entre le plan (P) et l'axe 704. Le carré du plan (P) dont une diagonale relie les points 706 et 708 définit deux nouveaux sommets 707 et 709. Dans ce cas générique et pour une configuration donnée des axes de rotation 702 et 704 dits axes secondaires, il existe deux ZPO (notées ZPO1 et ZPO2) dont les centres sont les points 707 et 709. Les ZPO sont des disques centrés sur 707 et 709 dont le rayon est égal à la moitié de la distance entre 706 et 709.

La commande de cette structure fonctionne comme suit : - Placer l'extrémité 310 dans la ZPO par l'action des articulations primaires qui comprennent l'ensemble des mobilités de la chaîne cinématique ; - Bloquer tous les degrés de mobilité à l'exception des rotations secondaires suivant les axes 702 et 704 ; - procéder au positionnement fin par l'action des axes 702 et 704. A ce stade, si l'extrémité terminale 310 se trouve par exemple en 709, les déplacements élémentaires induits par les rotations des axes 702 et 704 s'effectuent suivant deux directions perpendiculaires dans le plan (P), de 709 vers 706 et de 709 vers 708. De plus à commande et résolution égales sur les capteurs angulaires des axes 702 et 704, les incréments de position sont identiques dans ces deux directions perpendiculaires. Si l'extrémité terminale 310 s'éloigne du point 709 tout en restant dans la ZPO1, les déplacements élémentaires ne sont plus nécessairement orthogonaux mais restent linéairement indépendants et à résolution égale sur les capteurs angulaires, les incréments de position induits peuvent varier sensiblement. Cependant les avantages en termes d'amélioration de la précision de positionnement subsistent.

Dans une zone plus large que la ZPO dénommée zone d'intérêt (ZI1 et ZI2), la proximité de distance avec les axes 702 et 704 permet d'obtenir certains avantages lors du positionnement fin avec des performances certes dégradées par rapport à la ZPO mais souvent plus intéressantes que dans le reste de l'espace de travail.

Sauf applications spécifiques, il faut éviter de positionner le point 310 au centre du segment d'extrémités 706 et 708 puisque les déplacements élémentaires induits par les rotations élémentaires des axes secondaires 702 et 704 sont alors linéairement dépendants (singularité locale) suivant la direction liant les points 707 à 709.

La ZPO dépend de la configuration de la structure robotique, mais aussi de la stratégie de positionnement et, de déplacement de l'extrémité du bras et le cas échéant de l'outil supporté par rapport à la pièce à traiter. Il est toujours possible dans une étape préalable de choisir avec plus ou moins de latitude la position du centre de la ZPO dans l'espace de travail en agissant sur certains degrés de mobilité primaires.

Une articulation prismatique motorisée suivant un axe parallèle à l'axe de l'articulation 702 peut être ajoutée à l'extrémité de la chaîne cinématique 705 permettant un positionnement fin dans l'espace tridimensionnel, ce principe étant illustré par le mode de réalisation particulier de la figure 10.

En référence aux figures 8-a et 8-b, dans un mode de réalisation particulier permettant le positionnement de l'extrémité terminale de la structure robotique dans un plan de l'espace, la structure est composée de trois liaisons rotoïdes 802, 804 et 806 perpendiculaires au plan 811 et donc parallèles entre elles. La liaison rotoïde 802 est arrimée d'une part sur un support solidaire de l'espace 800 par un bras 801 et d'autre part est liée à la liaison rotoïde 804 par un bras 803. Un bras 805 supporte les liaisons rotoïdes 804 et 806. La liaison rotoïde 806 commande le bras 807. L'extrémité terminale à positionner 310 est solidaire du bras 807. Les longueurs des bras 805 et 807 sont sensiblement égales, avec une tolérance de l'ordre de la moitié de la longueur du bras 803. L'homme du métier cherchera à obtenir un rapport longueur de 805 / longueur de 803 le plus élevé possible tout en tenant compte des contraintes de l'espace de travail. A défaut de contrainte l'homme du métier considérera la longueur du bras 803 comme au moins dix fois inférieure à celle du bras 805. La longueur du bras 805 est choisie en fonction de la taille de l'espace de travail désiré.

Le plan 811 contient le point 310 et est perpendiculaire aux axes de rotation 802, 804 et 806. Dans ce cas précis, le centre de la ZPO est le sommet 810 d'un triangle rectangle isocèle compris dans le plan 811, dont l'hypoténuse a pour extrémités le point d'intersection 808 du plan 811 avec l'axe 802 et le point d'intersection 809 du plan 811 avec l'axe 804. Suivant les configurations des axes 802 et 804, le point 810 peut occuper différentes positions dans l'espace. Pour une configuration donnée, la zone d'intérêt correspond à un disque de centre 810 et dont le rayon est sensiblement égal à la moitié de la distance entre 810 et 808.

La commande de cette structure fonctionne comme suit : - Bloquer l'axe de rotation 802; - Placer l'extrémité 310 dans la zone d'intérêt par l'action de 804 et 806 ; - Bloquer 806 ; - procéder au positionnement fin par l'action de 802 et 804. A ce stade, si l'extrémité terminale 310 se trouve au niveau du point 810, les déplacements élémentaires induits par les rotations des axes 802 et 804 s'effectuent suivant deux directions perpendiculaires dans le plan 811 (de 810 à 808 et de 810 à 809). De plus à commande et résolution égale sur les capteurs angulaires des axes 802 et 804, les incréments de position sont identiques dans ces deux directions perpendiculaires. Dans une étape préalable, il est possible de choisir la position du centre de la ZPO en actionnant l'axe 802. Si l'extrémité terminale 310 s'éloigne du point 810 tout en restant dans la ZPO, les déplacements élémentaires ne sont plus nécessairement orthogonaux mais restent linéairement indépendants et à résolution égale sur les capteurs angulaires, les incréments de position induits peuvent varier sensiblement. Cependant les avantages en termes d'amélioration de la précision de positionnement subsistent.

En référence à la figure 8-c, l'exactitude de positionnement peut être nettement améliorée dans la zone d'intérêt en utilisant un processus de calibration locale à l'issue de la phase de prépositionnement. Deux capteurs extéroceptifs 812 et 813, par exemple des micromètres numériques, permettent de connaître avec précision la position de l'extrémité terminale 310 dans la zone d'intérêt. Lors de l'étape de positionnement fin, l'articulation 806 étant bloquée, les mouvements s'effectuent uniquement à partir des axes de rotation 802 et 804. Le modèle géométrique secondaire reliant les déplacements angulaires des axes secondaires aux déplacements cartésiens dans le plan peut être reconstruit à partir des distances estimées entre 804 et 310. Partant de la nouvelle référence dans le repère local grâce à cette opération de calibration, les déplacements sur une trajectoire 814 partant de la position occupée par 310 lors de la calibration sont estimés par le modèle géométrique secondaire. Du fait des faibles longueurs des bras de levier par rapport aux axes secondaires, du fait que les résolutions des capteurs placés sur les axes secondaires sont en général meilleures que sur les axes non secondaires, du fait des faibles distances entre les axes secondaires 802 et 804, du fait de l'opération de calibration, les performances en exactitude de positionnement dans la zone d'intérêt sont alors bien meilleures que si l'estimation de la position est calculée à partir du modèle géométrique prenant en compte toutes les articulations primaires.

En référence à la figure 8-d, dans un mode de réalisation particulier permettant le positionnement de l'extrémité terminale de la structure robotique dans un plan de l'espace, la structure est composée de trois liaisons rotoïdes 802, 804 et 806, 802 et 806 étant des axes de rotation secondaires et 804 étant uniquement un axe de rotation primaire. Le centre 810 de la ZPO est défini comme précédemment par rapport aux axes secondaires 802 et 806. Le procédé de commande consiste à bloquer 804 à l'issue de la phase de prépositionnement puis à activer uniquement les axes secondaires 802 et 806 en phase de positionnement fin. Contrairement au cas précédent, il est possible de modifier la position du centre 810 de la ZPO relativement aux axes de rotation secondaires en jouant sur la distance entre les axes 802 et 806, dépendant de la consigne angulaire donnée pour l'axe 804. Cela permet dans la phase de positionnement fin de diminuer ou d'augmenter la sensibilité des déplacements suivant les deux directions perpendiculaires. Un autre avantage est que ce dispositif peut s'intégrer sur des robots SCARA existants, la partie terminale constitué du bras 807 et de 310 pouvant être considérée comme un outil monté sur l'extrémité d'un robot SCARA possédant une résolution suffisante sur l'axe 806. L'inconvénient est que l'extrémité terminale 310 ne pourra être placée au centre de la ZPO que pour une valeur particulière de la consigne angulaire donnée pour l'axe 804.

Dans une variante de la structure précédente, les axes de rotation 802, 804 et 806 ne sont pas forcément strictement parallèles, cependant les déplacements de l'extrémité terminale dans la phase de positionnement fin en activant les axes secondaires restant coplanaires, les avantages de la structure en terme de performance en précision demeurent dans une ZPO pouvant être définie de manière analogue au cas précédent.

En référence à la figure 8-e, dans un mode de réalisation particulier permettant le positionnement de l'extrémité terminale de la structure robotique dans un plan de l'espace, les articulations secondaires sont une liaison rotoïde verticale 802 et une liaison prismatique horizontale 816 ; l'ajustement de la position finale étant assurée par le faible bras de levier de l'articulation 802 qui donne une résolution optimale suivant une direction et par l'articulation prismatique 816 dans la direction perpendiculaire. Il est envisageable d'ajouter une liaison prismatique verticale supplémentaire pour assurer un positionnement fin dans l'espace tridimensionnel.

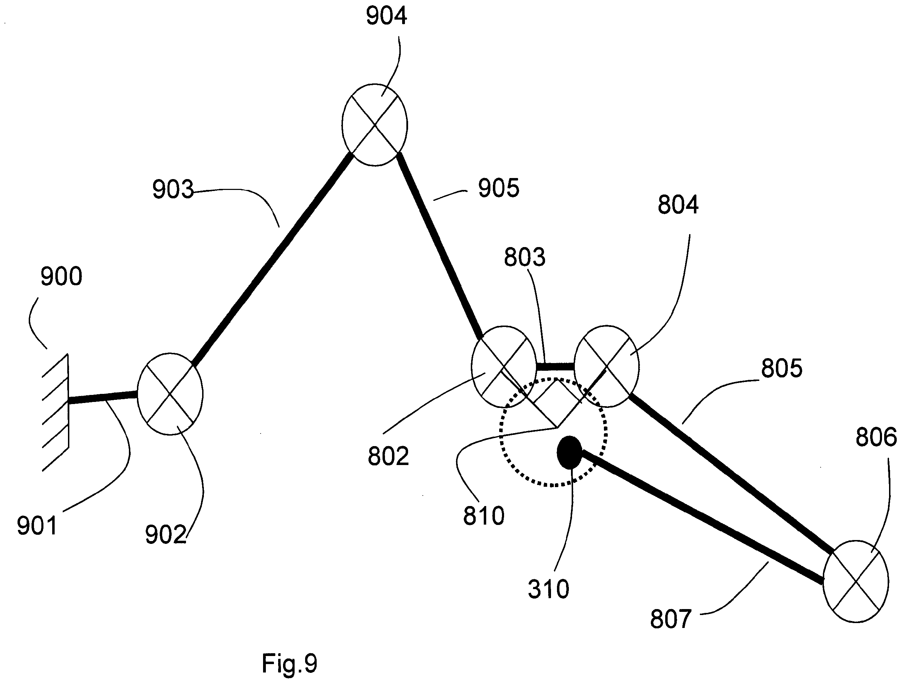

En référence à la figure 9, dans un mode de réalisation particulier, permettant le positionnement de l'extrémité terminale de la structure robotique dans un plan de l'espace (P), avec la possibilité de définir plus largement la ZPO, la structure est composée de 5 liaisons rotoïdes 902, 904, 802, 804, 806 toutes parallèles entre elles.

Dans cette structure, la chaîne cinématique 902 - 903 - 904 - 905 correspond à une structure robotique de type SCARA alors que la chaîne cinématique 802 - 803 - 804 - 805 - 806 - 807 - 310 est assimilable à la structure précédemment décrite pour un positionnement précis dans un plan.

La commande d'une telle structure commence par une étape de définition de la ZPO dans l'espace plan grâce aux liaisons rotoïdes 902 et 904. Le centre 810 de la ZPO peut ainsi être placé par l'homme du métier dans une zone arbitraire de l'espace de travail d'un robot SCARA constitué par la chaîne cinématique 902 - 903 - 904 - 905 .

L'homme du métier peut donc après avoir choisi le centre de la ZPO grâce à 902 et 904, procéder au positionnement précis selon le procédé décrit précédemment. Le choix des dimensions doit se faire de sorte à ce que l'ensemble des zones d'intérêt désirées de l'homme du métier fassent partie de l'espace atteignable par le robot SCARA correspondant à la chaîne cinématique 902 - 903 - 904 - 905. La répartition des longueurs entre 903 et 905 est à l'appréciation de l'homme du métier. A défaut de contrainte, les deux bras seront de longueurs identiques.

Cette structure permet avantageusement de procéder dans une zone plus large de l'espace de travail au positionnement fin en répétant si nécessaire les étapes de placement du centre de la ZPO, de prépositionnement et de positionnement fin de l'extrémité terminale du bras robotique de manière à placer le centre de la ZPO le plus proche possible de la cible désirée.

En référence à la figure 10, dans un mode de réalisation permettant le positionnement de l'extrémité terminale de la structure robotique dans l'espace tridimensionnel, la structure est composée de 3 liaisons rotoïdes 802, 804, 806, toutes parallèles entre elles et d'une liaison prismatique 850 suivant un axe également parallèle, le positionnement fin étant obtenu par déplacements élémentaires des articulations secondaires 802, 804 et 850, l'articulation 806 ayant été bloquée après la phase de prépositionnement.

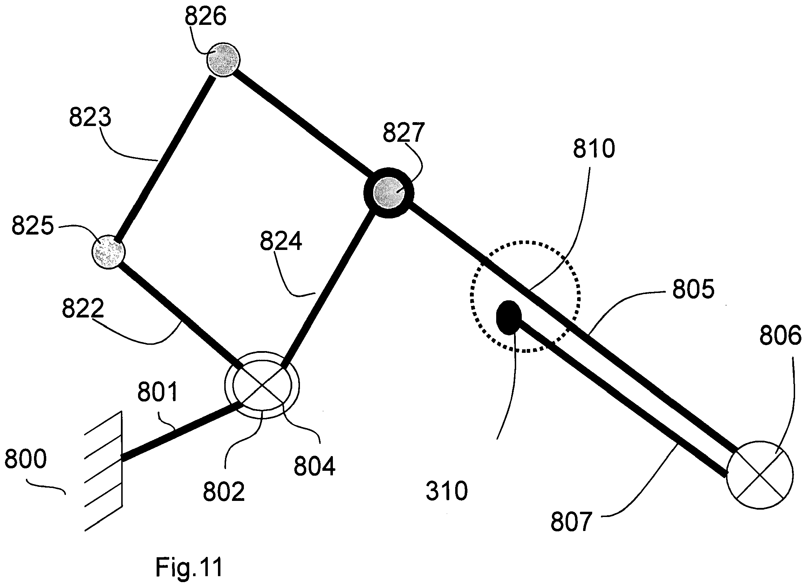

En référence à la figure 11, dans un mode de réalisation concernant une structure robotique hybride permettant le positionnement de l'extrémité terminale dans un plan, la structure est composée de trois liaisons rotoïdes motorisées 802, 804 et 806, et trois liaisons rotoïdes passives 825, 826 et 827. L'articulation rotoïde motorisée 802 commande la position angulaire du segment 822 et l'articulation rotoïde 804 commande la position angulaire du segment 824. Les segments 822, 823, 824 et la partie du segment 805 comprise entre les articulations 826 et 827 forment un parallélogramme, idéalement un losange. Le centre 810 de la ZPO est situé sur le segment 805 en position symétrique de l'articulation 826 par rapport à l'articulation 827. Le procédé de commande consiste à bloquer 806 à l'issue de la phase de prépositionnement puis à activer uniquement les axes secondaires 802 et 804 en phase de positionnement fin. Il est envisageable d'ajouter une liaison prismatique motorisée suivant un axe parallèle à 802 à l'extrémité du segment 807 afin de positionner finement l'extrémité terminale 310 dans l'espace tridimensionnel.

## Revendications

1. Robot comportant un bras articulé pour le déplacement d'une extrémité (310) dans un espace à N dimensions comprenant au moins N+1 articulations motorisées, ainsi qu'un calculateur pour commander les déplacements desdites articulations motorisées, ledit calculateur commandant une première étape de prépositionnement de l'extrémité terminale (310) du bras articulé et une deuxième étape de positionnement fin,
le robot étant **caractérisé en ce que** :
- ladite première étape de prépositionnement consistant à faire entrer l'extrémité (310) du bras articulé dans une zone d'intérêt, le plus près possible du centre de la zone de positionnement optimal (ZPO), centre défini en fonction de N articulations motorisées secondaires choisies parmi les N+1 articulations motorisées;
- ladite deuxième étape de positionnement fin consistant à bloquer toutes les articulations à l'exception desdites N articulations motorisées secondaires et à commander le déplacement de l'extrémité terminale par déplacements élémentaires de l'une au moins des N articulations motorisées secondaires, l'une au moins desdites articulations secondaires étant un axe de rotation ;
- le robot étant tel que, dans au moins une configuration donnée, les N articulations motorisées secondaires ne sont pas exclusivement les N dernières articulations de la chaine cinématique.

2. Robot selon la revendication 1, **caractérisé en ce que** les articulations secondaires sont telles que, dans au moins une configuration donnée, les distances des axes desdites articulations secondaires à l'extrémité terminale (310) sont faibles relativement aux distances entre les axes de rotation non secondaires et l'extrémité terminale (310).

3. Robot selon l'une quelconque des revendications 1 ou 2, **caractérisé en ce que** le bras articulé pour un positionnement dans un espace tridimensionnel comprend au moins quatre articulations motorisées (302, 304, 306, 308 ; 402, 404, 406, 408 ; 502, 504, 506, 508 ; 602, 604, 606, 608) dont parmi elles au moins 3 axes de rotation secondaires (302, 304, 306 ; 402, 404, 406 ; 502, 504, 506 ; 602, 604, 606), la première étape de prépositionnement consistant à amener l'extrémité terminale (310) du robot dans une zone d'intérêt, ladite zone d'intérêt étant un sous-ensemble de l'espace de travail, et **en ce que** la deuxième étape de positionnement fin consiste à bloquer toutes les articulations à l'exception desdits axes de rotation motorisés secondaires (302, 304, 306 ; 402, 404, 406 ; 502, 504, 506 ; 602, 604, 606) et à procéder au positionnement final par déplacements élémentaires par rotation d'au moins un desdits axes secondaires.

4. Robot selon l'une quelconque des revendications 1 ou 2, **caractérisé en ce que** le bras articulé pour un positionnement dans un espace tridimensionnel comprend au moins quatre articulations motorisées (302, 304, 306, 308 ; 402, 404, 406, 408 ; 502, 504, 506, 508 ; 602, 604, 606, 608) dont parmi elles au moins deux axes de rotation, la première étape de prépositionnement consistant à amener l'extrémité terminale (310) du robot dans la zone d'intérêt, ladite zone d'intérêt étant un sous-ensemble de l'espace de travail, et **en ce que** la deuxième étape de positionnement fin consiste à bloquer toutes les articulations à l'exception de trois articulations motorisées secondaires (302, 304, 306 ; 402, 404, 406 ; 502, 504, 506 ; 602, 604, 606) dont parmi elles lesdits deux axes de rotation et à procéder au positionnement final par déplacements élémentaires d'au moins une desdites articulations secondaires.

5. Robot selon l'une quelconque des revendications 1 ou 2, **caractérisé en ce que** le bras articulé pour un positionnement dans un espace tridimensionnel comprend au moins quatre articulations motorisées (302, 304, 306, 308 ; 402, 404, 406, 408 ; 502, 504, 506, 508 ; 602, 604, 606, 608) dont parmi elles au moins un axe de rotation, la première étape de prépositionnement consistant à amener l'extrémité terminale (310) du robot dans la zone d'intérêt, ladite zone d'intérêt étant un sous-ensemble de l'espace de travail, et **en ce que** la deuxième étape de positionnement fin consiste à bloquer toutes les articulations à l'exception de trois articulations motorisées secondaires (302, 304, 306 ; 402, 404, 406 ; 502, 504, 506 ; 602, 604, 606) dont parmi elles ledit axe de rotation et à procéder au positionnement final par déplacements élémentaires d'au moins une desdites articulations secondaires.

6. Robot selon l'une quelconque des revendications 1 ou 2, **caractérisé en ce que** le bras articulé comprend au moins trois articulations motorisées (802, 804, 806) dont parmi elles au moins deux axes de rotation parallèles dits secondaires et **en ce que** la première étape de prépositionnement consiste à amener l'extrémité terminale (310) du robot dans la zone d'intérêt, ladite zone d'intérêt est un disque dont le centre est le sommet opposé à l'hypoténuse d'un triangle rectangle isocèle compris dans un plan contenant l'extrémité terminale (310) du bras manipulateur et perpendiculaire aux axes de rotation secondaires, l'hypoténuse possédant un premier sommet (808) sur le premier axe de rotation secondaire et un deuxième sommet (809) sur le deuxième axe de rotation secondaire ; le diamètre dudit disque est approximativement égal à la distance entre les deux axes de rotation secondaire (802, 804) ; la deuxième étape de positionnement fin consistant à bloquer toutes les articulations motorisées à l'exception desdits axes de rotation motorisés secondaires (802, 804) et à procéder au positionnement final par déplacements élémentaires par rotation d'au moins un desdits axes secondaires.

7. Robot selon l'une quelconque des revendications 1 ou 2, **caractérisé en ce que** la structure articulée comprend au moins trois articulations motorisées (802, 804, 806) dont parmi elles au moins deux axes de rotation parallèles dits secondaires (802, 804) et **en ce que** la première étape de prépositionnement consiste à amener l'extrémité terminale (310) du robot dans la zone d'intérêt ; la deuxième étape de positionnement fin consistant à bloquer toutes les articulations motorisées à l'exception desdits axes de rotation motorisés secondaires (802, 804) et à procéder au positionnement final par déplacements élémentaires par rotation d'au moins un desdits axes secondaires.

8. Robot selon l'une quelconque des revendications 1 ou 2, **caractérisé en ce que** le bras articulé pour un positionnement dans un plan de l'espace comprend au moins trois articulations motorisées (802, 804, 806) dont parmi elles au moins un axe de rotation, la première étape de prépositionnement consistant à amener l'extrémité terminale (310) du robot dans la zone d'intérêt, ladite zone d'intérêt étant un sous-ensemble de l'espace de travail, et **en ce que** la deuxième étape de positionnement fin consiste à bloquer toutes les articulations à l'exception de deux articulations motorisées secondaires (802, 804) dont parmi elles ledit axe de rotation et à procéder au positionnement final par déplacements élémentaires d'au moins une desdites articulations secondaires.

9. Robot selon l'une quelconque des revendications précédentes, comprenant au moins une articulation supplémentaire placée en amont de la chaîne cinématique **caractérisé en ce qu'**une étape liminaire, permet la définition d'une zone d'intérêt par l'action de la ou desdites articulations supplémentaires

10. Robot selon l'une quelconque des revendications précédentes **caractérisé en ce que** le positionnement fin est obtenu de manière indirecte par répétition d'une portion de trajectoire à partir d'un point particulier appelé point d'harmonisation vers le point cible, afin de s'affranchir des problèmes de frottements secs, le point d'harmonisation étant un point situé en dehors de la zone morte liée au point cible.

11. Robot selon l'une quelconque des revendications précédentes **caractérisé en ce que** le positionnement fin est obtenu par exploitation d'informations extéroceptives permettant de déduire l'écart entre la position de l'extrémité terminale (310) du robot et le point cible et de commander le robot par déplacements élémentaires des articulations secondaires.

12. Robot selon l'une quelconque des revendications précédentes **caractérisé en ce que** les deux étapes sont calculées préalablement à l'exécution, pour préparer une loi de commande pour un déplacement continu.

13. Robot selon l'une quelconque des revendications précédentes **caractérisé en ce que** les deux étapes sont calculées préalablement à l'exécution, pour préparer une loi de commande et un recalcul périodique en cours de déplacement.

14. Robot selon l'une quelconque des revendications précédentes **caractérisé en ce que** la commande du robot redondant pour le positionnement fin utilise à l'issue de la phase de prépositionnement un processus de calibration local pour une meilleure exactitude de pose.

15. Robot selon l'une quelconque des revendications précédentes **caractérisé en ce qu'**un poignet est fixé à l'extrémité du robot permettant le contrôle de l'orientation d'un objet ou outil.

16. Procédé de déplacement dans un espace à N dimensions d'une extrémité d'un bras articulé de robot comprenant au moins N+1 articulations motorisées, le procédé étant **caractérisé en ce qu'**il comporte les étapes suivantes :
- une première étape de prépositionnement de l'extrémité terminale (310) du bras articulé consistant à faire entrer l'extrémité du bras articulé dans une zone d'intérêt, le plus près possible du centre de la zone de positionnement optimal, centre défini en fonction de N articulations motorisées secondaires choisies parmi les N+1 articulations motorisées ;
- une deuxième étape de positionnement fin consistant à bloquer toutes les articulations à l'exception desdites N articulations motorisées secondaires et à commander le déplacement de l'extrémité terminale (310) par déplacements élémentaires de l'une au moins des N articulations motorisées secondaires, l'une au moins desdites articulations secondaires étant un axe de rotation, les N articulations motorisées secondaires n'étant pas exclusivement les N dernières articulations de la chaine cinématique.

17. Procédé de déplacement d'une extrémité d'un bras articulé de robot selon la revendication 16, **caractérisé en ce que** les articulations secondaires sont telles que, dans au moins une configuration donnée, les distances des axes desdites articulations secondaires à l'extrémité terminale (310) sont faibles relativement aux distances entres les axes de rotation non secondaires et l'extrémité terminale (310).

## Patentansprüche

1. Roboter, umfassend einen Gelenkarm zum Bewegen eines Endes (310) in einem Raum mit N Dimensionen, der zumindest N+1 Gelenkantriebe umfasst, sowie einen Rechner zum Steuern der Bewegungen der Gelenkantriebe, wobei der Rechner einen ersten Schritt der Vorpositionierung des Abschlussendes (310) des Gelenkarms und einen zweiten Schritt der Endpositionierung steuert,
wobei der Roboter **dadurch gekennzeichnet ist, dass**:
- der erste Schritt der Vorpositionierung darin besteht, das Ende (310) des Gelenkarms in einen interessierenden Bereich so nah wie möglich zur Mitte des optimalen Positionierungsbereichs (ZPO) einzubringen, wobei die Mitte in Abhängigkeit von N sekundären Gelenkantrieben, die aus den N+1 Gelenkantrieben ausgewählt sind, definiert ist;
- der zweite Schritt der Endpositionierung darin besteht, alle Gelenke mit Ausnahme der N sekundären Gelenkantriebe zu blockieren und die Bewegung des Abschlussendes durch elementare Bewegungen des zumindest einen der N sekundären Gelenkantriebe zu steuern, wobei das zumindest eine der sekundäre Gelenke eine Drehachse ist;
- der Roboter so ausgelegt ist, dass in zumindest einer bestimmten Konfiguration die N sekundären Gelenkantriebe nicht ausschließlich die N letzten Gelenke der kinematischen Kette sind.

2. Roboter nach Anspruch 1, **dadurch gekennzeichnet, dass** die sekundären Gelenke so ausgelegt sind, dass in zumindest einer bestimmten Konfiguration die Abstände der Achsen der sekundären Gelenke zum Abschlussende (310) im Verhältnis zu den Abständen zwischen den nicht sekundären Drehachsen und dem Abschlussende (310) klein sind.

3. Roboter nach einem der Ansprüche 1 oder 2, **dadurch gekennzeichnet, dass** der Gelenkarm für eine Positionierung in einem dreidimensionalen Raum zumindest vier Gelenkantriebe (302, 304, 306, 308; 402, 404, 406, 408; 502, 504, 506, 508; 602, 604, 606, 608), darunter zumindest 3 sekundäre Drehachsen (302, 304, 306; 402, 404, 406; 502, 504, 506; 602, 604, 606), umfasst, wobei der erste Schritt der Vorpositionierung darin besteht, das Abschlussende (310) des Roboters in einen interessierenden Bereich zu bringen, wobei der interessierende Bereich eine Teilmenge des Arbeitsraums ist, und dadurch, dass der zweite Schritt der Endpositionierung darin besteht, alle Gelenke mit Ausnahme der angetriebenen sekundären Drehachsen (302, 304, 306; 402, 404, 406; 502, 504, 506; 602, 604, 606) zu blockieren und die Endpositionierung durch elementare Bewegungen durch Drehung zumindest einer der sekundären Achsen vorzunehmen.

4. Roboter nach einem der Ansprüche 1 oder 2, **dadurch gekennzeichnet, dass** der Gelenkarm für eine Positionierung in einem dreidimensionalen Raum zumindest vier Gelenkantriebe (302, 304, 306, 308; 402, 404, 406, 408; 502, 504, 506, 508; 602, 604, 606, 608), darunter zumindest zwei Drehachsen, umfasst, wobei der erste Schritt der Vorpositionierung darin besteht, das Abschlussende (310) des Roboters in den interessierenden Bereich zu bringen, wobei der interessierende Bereich eine Teilmenge des Arbeitsraums ist, und dadurch, dass der zweite Schritt der Endpositionierung darin besteht, alle Gelenke mit Ausnahme der drei sekundären Gelenkantriebe (302, 304, 306; 402, 404, 406; 502, 504, 506; 602, 604, 606), darunter die der beiden Drehachsen, zu blockieren und die Endpositionierung durch elementare Bewegungen zumindest eines der sekundären Gelenke vorzunehmen.

5. Roboter nach einem der Ansprüche 1 oder 2, **dadurch gekennzeichnet, dass** der Gelenkarm für eine Positionierung in einem dreidimensionalen Raum zumindest vier Gelenkantriebe (302, 304, 306, 308; 402, 404, 406, 408; 502, 504, 506, 508; 602, 604, 606, 608), darunter zumindest eine Drehachse, umfasst, wobei der erste Schritt der Vorpositionierung darin besteht, das Abschlussende (310) des Roboters in den interessierenden Bereich zu bringen, wobei der interessierende Bereich eine Teilmenge des Arbeitsraums ist, und dadurch, dass der zweite Schritt der Endpositionierung darin besteht, alle Gelenke mit Ausnahme der drei sekundären Gelenkantriebe (302, 304, 306; 402, 404, 406; 502, 504, 506; 602, 604, 606), darunter die Drehachse, zu blockieren und die Endpositionierung durch elementare Bewegungen zumindest eines der sekundären Gelenke vorzunehmen.

6. Roboter nach einem der Ansprüche 1 oder 2, **dadurch gekennzeichnet, dass** der Gelenkarm zumindest drei Gelenkantriebe (802, 804, 806), darunter zumindest zwei sogenannte sekundäre parallele Drehachsen, umfasst, und dadurch, dass der erste Schritt der Vorpositionierung darin besteht, das Abschlussende (310) des Roboters in den interessierenden Bereich zu bringen, wobei der interessierende Bereich eine Platte ist, deren Mitte die Spitze ist, die der Hypotenuse eines gleichschenkligen rechtwinkligen Dreiecks gegenüberliegt, das in einer das Abschlussende (310) des Manipulatorarms enthaltenden, zu den sekundären Drehachsen senkrechten Ebene enthalten ist, wobei die Hypotenuse eine erste Spitze (808) auf der ersten sekundären Drehachse und eine zweite Spitze (809) auf der zweiten sekundären Drehachse besitzt; wobei der Durchmesser der Platte etwa gleich dem Abstand zwischen den beiden sekundären Drehachsen (802, 804) ist; wobei der zweite Schritt der Endpositionierung darin besteht, alle Gelenkantriebe mit Ausnahme der angetriebenen sekundären Drehachsen (802, 804) zu blockieren und die Endpositionierung durch elementare Bewegungen durch Drehung zumindest einer der sekundären Achsen vorzunehmen.

7. Roboter nach einem der Ansprüche 1 oder 2, **dadurch gekennzeichnet, dass** die Gelenkstruktur zumindest drei Gelenkantriebe (802, 804, 806), darunter zumindest zwei sogenannte sekundäre parallele Drehachsen (802, 804), umfasst, und dadurch, dass der erste Schritt der Vorpositionierung darin besteht, das Abschlussende (310) des Roboters in den interessierenden Bereich zu bringen; wobei der zweite Schritt der Endpositionierung darin besteht, alle Gelenkantriebe mit Ausnahme der angetriebenen sekundären Drehachsen (802, 804) zu blockieren und die Endpositionierung durch elementare Bewegungen durch Drehung zumindest einer der sekundären Achsen vorzunehmen.

8. Roboter nach einem der Ansprüche 1 oder 2, **dadurch gekennzeichnet, dass** der Gelenkarm für eine Positionierung in einer Ebene des Raums zumindest drei Gelenkantriebe (802, 804, 806), darunter zumindest eine Drehachse, umfasst, wobei der erste Schritt der Vorpositionierung darin besteht, das Abschlussende (310) des Roboters in den interessierenden Bereich zu bringen, wobei der interessierenden Bereich eine Teilmenge des Arbeitsraums ist, und dadurch, dass der zweite Schritt der Endpositionierung darin besteht, alle Gelenke mit Ausnahme von zwei sekundären Gelenkantrieben (802, 804), darunter die Drehachse, zu blockieren und die Endpositionierung durch elementare Bewegungen zumindest eines der sekundären Gelenke vorzunehmen.

9. Roboter nach einem der vorangehenden Ansprüche, umfassend zumindest ein zusätzliches Gelenk, das stromaufwärts der kinematischen Kette angeordnet ist, **dadurch gekennzeichnet, dass** ein einleitender Schritt die Definition eines interessierenden Bereichs durch Betätigung des bzw. der zusätzlichen Gelenks/-e ermöglicht.

10. Roboter nach einem der vorangehenden Ansprüche **dadurch gekennzeichnet, dass** die Endpositionierung auf indirekte Weise durch Wiederholung eines Bahnabschnitts von einem bestimmten, als Harmonisierungspunkt bezeichneten Punkt zum Zielpunkt erhalten wird, um Trockenreibungsprobleme zu vermeiden, wobei der Harmonisierungspunkt ein Punkt ist, der sich außerhalb des mit dem Zielpunkt verbundenen Totbereichs befindet.

11. Roboter nach einem der vorangehenden Ansprüche **dadurch gekennzeichnet, dass** die Endpositionierung durch Nutzung exterozeptiver Informationen erhalten wird, die es ermöglichen, die Abweichung zwischen der Position des Abschlussendes (310) des Roboters und dem Zielpunkt abzuleiten und den Roboter durch elementare Bewegungen der sekundären Gelenke zu steuern.

12. Roboter nach einem der vorangehenden Ansprüche **dadurch gekennzeichnet, dass** die beiden Schritte vor der Ausführung berechnet werden, um ein Steuerungsgesetz für eine fortlaufende Bewegung vorzubereiten.

13. Roboter nach einem der vorangehenden Ansprüche, **dadurch gekennzeichnet, dass** die beiden Schritte vor der Ausführung berechnet werden, um ein Steuerungsgesetz und eine periodische Neuberechnung während der Bewegung vorzubereiten.

14. Roboter nach einem der vorangehenden Ansprüche, **dadurch gekennzeichnet, dass** die Steuerung des redundanten Roboters für die Endpositionierung am Ende der Vorpositionierungsphase einen lokalen Kalibrierungsvorgang für eine bessere Anordnungsgenauigkeit verwendet.

15. Roboter nach einem der vorangehenden Ansprüche, **dadurch gekennzeichnet, dass** am Ende des Roboters ein Handgelenk befestigt ist, das die Steuerung der Ausrichtung eines Gegenstands oder Werkzeugs ermöglicht.

16. Verfahren zur Bewegung eines Endes eines Robotergelenkarms mit zumindest N+1 Gelenkantrieben in einem Raum mit N Dimensionen, wobei das Verfahren **dadurch gekennzeichnet ist, dass** es die folgenden Schritte umfasst:
- einen ersten Schritt der Vorpositionierung des Abschlussendes (310) des Gelenkarms, der darin besteht, das Ende des Gelenkarms in einen interessierenden Bereich so nah wie möglich zur Mitte des optimalen Positionierungsbereichs einzubringen, wobei die Mitte in Abhängigkeit von N sekundären Gelenkantrieben, die aus den N+1 Gelenkantrieben ausgewählt sind, definiert ist;
- einen zweiten Schritt der Endpositionierung, der darin besteht, alle Gelenke mit Ausnahme der N sekundären Gelenkantriebe zu blockieren und die Bewegung des Abschlussendes (310) durch elementare Bewegungen des zumindest einen der N sekundären Gelenkantriebe zu steuern, wobei das zumindest eine der sekundären Gelenke eine Drehachse ist, wobei die N sekundären Gelenkantriebe nicht ausschließlich die N letzten Gelenke der kinematische Kette sind.

17. Verfahren zur Bewegung eines Endes eines Robotergelenkarms nach Anspruch 16, **dadurch gekennzeichnet, dass** die sekundären Gelenke so ausgelegt sind, dass in zumindest einer bestimmten Konfiguration die Abstände der Achsen der sekundären Gelenke zum Abschlussende (310) im Verhältnis zu den Abständen zwischen den nicht sekundären Drehachsen und dem Abschlussende (310) klein sind.

## Claims

1. Robot comprising an articulated arm for moving an end (310) in a space with N dimensions, comprising at least N+1 motorized articulations, and a computer for controlling the movements of said motorized articulations, said computer controlling a first step of prepositioning the terminal end (310) of the articulated arm and a second step of fine positioning,
the robot being **characterized in that**:
- said first, prepositioning step consists in making the end (310) of the articulated arm enter into a zone of interest, as close as possible to the centre of the optimal positioning zone (ZPO), the centre being defined as a function of N secondary motorized articulations chosen from among the N+1 motorized articulations;
- said second, fine positioning step consists in blocking all the articulations except for said N secondary motorized articulations and in controlling the movement of the terminal end by elementary movements of at least one of the N secondary motorized articulations, at least one of said secondary articulations being an axis of rotation;
- the robot is such that in at least one given configuration, the N secondary motorized articulations are not exclusively the last N articulations of the kinematic chain.

2. Robot according to Claim 1, **characterized in that** the secondary articulations are such that, in at least one given configuration, the distances from the axes of said secondary articulations to the terminal end (310) are small relative to the distances between the non-secondary axes of rotation and the terminal end (310).

3. Robot according to either one of Claims 1 and 2, **characterized in that** the articulated arm for positioning in a three-dimensional space comprises at least four motorized articulations (302, 304, 306, 308; 402, 404, 406, 408; 502, 504, 506, 508; 602, 604, 606, 608) including among them at least 3 secondary axes of rotation (302, 304, 306; 402, 404, 406; 502, 504, 506; 602, 604, 606), the first, prepositioning step consisting in bringing the terminal end (310) of the robot into a zone of interest, said zone of interest being a subset of the work space, and **in that** the second, fine positioning step consists in blocking all the articulations except for said secondary motorized axes of rotation (302, 304, 306; 402, 404, 406; 502, 504, 506; 602, 604, 606) and in proceeding with the final positioning by elementary movements by rotation of at least one of said secondary axes.

4. Robot according to either one of Claims 1 and 2, **characterized in that** the articulated arm for positioning in a three-dimensional space comprises at least four motorized articulations (302, 304, 306, 308; 402, 404, 406, 408; 502, 504, 506, 508; 602, 604, 606, 608) including among them at least two axes of rotation, the first, prepositioning step consisting in bringing the terminal end (310) of the robot into the zone of interest, said zone of interest being a subset of the work space, and **in that** the second, fine positioning step consists in blocking all the articulations except for three secondary motorized articulations (302, 304, 306; 402, 404, 406; 502, 504, 506; 602, 604, 606) including among them said two axes of rotation and in proceeding with the final positioning by elementary movements of at least one of said secondary articulations.

5. Robot according to either one of Claims 1 and 2, **characterized in that** the articulated arm for positioning in a three-dimensional space comprises at least four motorized articulations (302, 304, 306, 308; 402, 404, 406, 408; 502, 504, 506, 508; 602, 604, 606, 608) including among them at least one axis of rotation, the first, prepositioning step consisting in bringing the terminal end (310) of the robot into the zone of interest, said zone of interest being a subset of the work space, and **in that** the second, fine positioning step consists in blocking all the articulations except for three secondary motorized articulations (302, 304, 306; 402, 404, 406; 502, 504, 506; 602, 604, 606) including among them said axis of rotation and in proceeding with the final positioning by elementary movements of at least one of said secondary articulations.

6. Robot according to either one of Claims 1 and 2, **characterized in that** the articulated arm comprises at least three motorized articulations (802, 804, 806) including among them at least two so-called secondary parallel axes of rotation and **in that** the first, prepositioning step consists in bringing the terminal end (310) of the robot into the zone of interest, said zone of interest being a disc whose centre is the vertex opposite the hypotenuse of an isosceles right-angled triangle included in a plane containing the terminal end (310) of the manipulator arm and at right angles to the secondary axes of rotation, the hypotenuse having a first vertex (808) on the first secondary axis of rotation and a second vertex (809) on the second secondary axis of rotation; the diameter of said disc being approximately equal to the distance between the two secondary axes of rotation (802, 804); the second, fine positioning step consisting in blocking all the motorized articulations except for said secondary motorized axes of rotation (802, 804) and in proceeding with the final positioning by elementary movements by rotation of at least one of said secondary axes.

7. Robot according to either one of Claims 1 and 2, **characterized in that** the articulated structure comprises at least three motorized articulations (802, 804, 806) including among them at least two so-called secondary parallel axes of rotation (802, 804) and **in that** the first, prepositioning step consists in bringing the terminal end (310) of the robot into the zone of interest; the second, fine positioning step consisting in blocking all the motorized articulations except for said secondary motorized axes of rotation (802, 804) and in proceeding with the final positioning by elementary movements by rotation of at least one of said secondary axes.

8. Robot according to either one of Claims 1 and 2, **characterized in that** the articulated arm for positioning in a plane of the space comprises at least three motorized articulations (802, 804, 806) including among them at least one axis of rotation, the first, prepositioning step consisting in bringing the terminal end (310) of the robot into the zone of interest, said zone of interest being a subset of the work space, and **in that** the second, fine positioning step consists in blocking all the articulations except for two secondary motorized articulations (802, 804) including among them said axis of rotation and in proceeding with the final positioning by elementary movements of at least one of said secondary articulations.

9. Robot according to any one of the preceding claims, comprising at least one additional articulation placed upstream of the kinematic chain, **characterized in that** a preliminary step makes it possible to define a zone of interest by the action of the additional articulation or said additional articulations.

10. Robot according to any one of the preceding claims, **characterized in that** the fine positioning is obtained indirectly by repetition of a portion of trajectory from a particular point called harmonization point to the target point, in order to overcome the dry friction problems, the harmonization point being a point situated outside of the dead zone linked to the target point.

11. Robot according to any one of the preceding claims, **characterized in that** the fine positioning is obtained by processing exteroceptive information making it possible to deduce the difference between the position of the terminal end (310) of the robot and the target point and to control the robot by elementary movements of the secondary articulations.

12. Robot according to any one of the preceding claims, **characterized in that** the two steps are computed prior to execution, to prepare a control law for a continuous movement.

13. Robot according to any one of the preceding claims, **characterized in that** the two steps are computed prior to execution, to prepare a control law and a periodic recomputation during movement.

14. Robot according to any one of the preceding claims, **characterized in that** the control of the redundant robot for the fine positioning uses, at the end of the prepositioning phase, a local calibration process for a better placement accuracy.

15. Robot according to any one of the preceding claims, **characterized in that** a wrist is fixed to the end of the robot allowing the control of the orientation of an object or tool.

16. Method for moving, in a space with N dimensions, an end of an articulated robot arm comprising at least N+1 motorized articulations, the method being **characterized in that** it comprises the following steps:
- a first step of prepositioning the terminal end (310) of the articulated arm consisting in making the end of the articulated arm enter into a zone of interest, as close as possible to the centre of the optimal positioning zone, the centre being defined as a function of N secondary motorized articulations chosen from among the N+1 motorized articulations;
- a second, fine positioning step consisting in blocking all the articulations except for said N secondary motorized articulations and in controlling the movement of the terminal end (310) by elementary movements of at least one of the N secondary motorized articulations, at least one of said secondary articulations being an axis of rotation, the N secondary motorized articulations not being exclusively the last N articulations of the kinematic chain.

17. Method for moving an end of an articulated robot arm according to Claim 16, **characterized in that** the secondary articulations are such that, in at least one given configuration, the distances from the axes of said secondary articulations to the terminal end (310) are small relative to the distances between the non-secondary axes of rotation and the terminal end (310).
